# EUROPEAN PATENT SPECIFICATION

(11) **EP 1 118 188 B1**
(45) Date of publication and mention of the grant of the patent: **07.03.2007**
(21) Application number: 00952237.6
(22) Date of filing: 27.07.2000
(51) Int. Cl.: H04L 12/56, H04Q 11/04, H04L 12/64

(54) **SCHEDULING WITH DIFFERENT TIME INTERVALS**
ABLAUFPLANUNG MIT VERSCHIEDENEN ZEIT-INTERVALLEN
PROGRAMMATION AVEC DIFFERENTS INTERVALLES HORAIRES

(30) Priority: 28.07.1999 US 362334; 28.07.1999 US 362335; 14.10.1999 US 418279
(43) Date of publication of application: 25.07.2001
(73) Proprietor: Synchrodyne Networks, Inc., Tenafly, NY 07670 (US)
(72) Inventor: OFEK, Yoram, Riverdale, NY 10463 (US)
(74) Representative: Borsano, Corrado
(86) International application number: PCT/US2000/020490
(87) International publication number: WO 2001/010087

(56) References cited:
- JAMALODDIN GOLESTANI S: "A FRAMING STRATEGY FOR CONGESTION MANAGEMENT" IEEE JOURNAL ON SELECTED AREAS IN COMMUNICATIONS,US,IEEE INC. NEW YORK, vol. 9, no. 7, 1 September 1991 (1991-09-01), pages 1064-1077, XP000272780 ISSN: 0733-8716
- LI C -S ET AL: "Pseudo-isochronous cell forwarding" COMPUTER NETWORKS AND ISDN SYSTEMS,NL,NORTH HOLLAND PUBLISHING. AMSTERDAM, vol. 30, no. 24, 14 December 1998 (1998-12-14), pages 2359-2372, XP004150561 ISSN: 0169-7552
- LI C -S ET AL: "TIME-DRIVEN PRIORITY FLOW CONTROL FOR REAL-TIME HETEROGENEOUS INTERNETWORKING" PROCEEDINGS OF INFOCOM,US,LOS ALAMITOS, IEEE COMP. SOC. PRESS, vol. CONF. 15, 24 March 1996 (1996-03-24), pages 189-197, XP000622310 ISBN: 0-8186-7293-5

## Description

### RELATED APPLICATIONS

### FEDERALLY SPONSORED RESEARCH OR DEVELOPMENT

Not Applicable.

### BACKGROUND OF THE INVENTION:

This invention relates to generally to a method and apparatus for transmitting of data on a communications network. More specifically, this invention relates to timely forwarding and delivery of data over the network and to their destination nodes, where the destination nodes are connected with point-to-point links or over a multiple access shared medium. Consequently, the end-to-end performance parameters, such as, loss, delay and jitter, have either deterministic or probabilistic guarantees.

The proliferation of high-speed communications links, fast processors, and affordable, multimedia-ready personal computers brings about the need for wide area networks that can carry real-time data, like telephony and video. However, the end-to-end transport requirements of real-time multimedia applications present a major challenge that cannot be solved satisfactorily by current networking technologies. Such applications as video teleconferencing, and audio and video group (many-to-many) multicasting generate data at a wide range of bit rates and require predictable, stable performance and strict limits on loss rates, end-to-end delay bounds, and delay variations ("jitter"). These characteristics and performance requirements are incompatible with the services that current circuit and packet switching networks can offer.

Circuit-switching networks, which are still the main carrier for real-time traffic, are designed for telephony service and cannot be easily enhanced to support multiple services or carry multimedia traffic. Its synchronous byte switching enables circuit-switching networks to transport data streams at constant rates with little delay or jitter. However, since circuit-switching networks allocate resources exclusively for individual connections, they suffer from low utilization under bursty traffic. Moreover, it is difficult to dynamically allocate circuits of widely different capacities, which makes it a challenge to support multimedia traffic. Finally, the synchronous byte switching of SONET, which embodies the Synchronous Digital Hierarchy (SDH), requires increasingly more precise clock synchronization as the lines speed increases [John C. Bellamy, "Digital Network Synchronization", *IEEE Communications Magazine,* April 1995, pages 70-83].

Packet switching networks like IP (Internet Protocol)-based Internet and Intranets [see, for example, A.Tannebaum, *Computer Networks* (3rd Ed) Prentice Hall, 1996] and ATM (Asynchronous Transfer Mode) [see, for example, Handel et al., *ATM Networks: Concepts, Protocols, and Applications* (2nd Ed.) Addison-Wesley, 1994] handle bursty data more efficiently than circuit switching, due to their statistical multiplexing of the packet streams. However, current packet switches and routers operate asynchronously and provide best effort service only, in which end-to-end delay and jitter are neither guaranteed nor bounded. Furthermore, statistical variations of traffic intensity often lead to congestion that results in excessive delays and loss of packets, thereby significantly reducing the fidelity of real-time streams at their points of reception.

Efforts to define advanced services for both IP and ATM have been conducted in two levels: (1) definition of service, and (2) specification of methods for providing different services to different packet streams. The former defines interfaces, data formats, and performance objectives. The latter specifies procedures for processing packets by hosts and switches/routers. The types of services that defined for ATM include constant bit rate (CBR), variable bit rate (VBR) and available bit rate (ABR).

The real-time transport protocol (RTP) [H. Schultzrinne et. al, "RTP: A Transport Protocol for Real-Time Applications", *IETF Request for Comment RFC1889,* January 1996] is a method for encapsulating time-sensitive data packets and attaching to the data time related information like time stamps and packet sequence number.

One approach to an optical network that uses synchronization was introduced in the synchronous optical hypergraph [Y. Ofek, "The Topology, Algorithms And Analysis Of A Synchronous Optical Hypergraph Architecture", Ph.D. Dissertation, Electrical Engineering Department, University of Illinois at Urbana, *Report No. UIUCDCS-R-87-1343,* May 1987], which also relates to how to integrate packet telephony using synchronization [Y. Ofek, "Integration Of Voice Communication On A Synchronous Optical Hypergraph", *IEEE INFOCOM'88,* 1988]. In the synchronous optical hypergraph, the forwarding is performed over hyper-edges, which are passive optical stars. In [Li et al., "Pseudo-Isochronous Cell Switching In ATM Networks", *IEEE INFOCOM'94,* pages 428-437, 1994; Li et al., "Time-Driven Priority: Flow Control For Real-Time Heterogeneous Intemetworking", *IEEE INFOCOM'96,* 1996] the synchronous optical hypergraph idea was applied to networks with an arbitrary topology and with point-to-point links. The two papers [Li et al., "Pseudo-Isochronous Cell Switching In ATM Networks", *IEEE INFOCOM'94,* pages 428-437, 1994; Li et al., "Time-Driven Priority: Flow Control For Real-Time Heterogeneous Internetworking", *IEEE INFOCOM'96,* 1996] provide an abstract (high level) description of what is called "RISC-like forwarding", in which a packet is forwarded, with little if any details, one hop every time frame in a manner similar to the execution of instructions in a Reduced Instruction Set Computer (RISC) machine.

This invention also relates to generally to a method and apparatus for transmitting of data on a communications network. More specifically, this invention relates to timely forwarding and delivery of data packets over the network to Voice over Internet Protocol (**VoIP**) gateways (see for example: [M. Hamdi, O. Verscheure, J-P Hubaux, I. Dalgic, and P. Wang, *Voice Service Interworking and IP Networks,* IEEE Communications Magazine, May 1999, pp. 104-111]). Consequently, between any two VoIP gateways the end-to-end performance parameters, such as, loss, delay and jitter, have deterministic guarantees.

See also Y. OFEK, "The Integrated MetaNet Architecture: A Switch-based Multimedia LAN for Parallel Computing and Real-time Traffic", IBM.

In U.S. Pat. No. 5,418,779, Yemini et al. discloses switched network architecture with common time reference. The time reference is used in order to determine the time
in which multiplicity of nodes can transmit simultaneously over one predefined routing tree to one destination. At every time instance the multiplicity of nodes are transmitting to different single destination node.

### SUMMARY OF THE INVENTION:

In accordance with the present invention, a system is disclosed providing virtual pipes that carry real-time traffic over packet switching networks with widely varying link speeds, while guaranteeing end-to-end performance. The system combines the advantages of both circuit and packet switching. It provides for allocation for the exclusive use of predefined connections and for those connections it guarantees loss free transport with low delay and jitter. When predefined connections do not use their allocated resources, other non-reserved data packets can use them without affecting the performance of the predefined connections.

Under the aforementioned prior art methods for providing packet switching services, switches and routers operate asynchronously. The present invention provides real-time services by synchronous methods that utilize a time reference that is common to the switches and end stations comprising a wide area network. The common time reference can be realized by using UTC (Coordinated Universal Time), which is globally available via, for example, GPS (Global Positioning System - see, for example: [Peter H. Dana, "Global Positioning System (GPS) Time Dissemination for Real-Time Applications", *Real-Time Systems,* 12, pp. 9-40, 1997]. By international agreement, UTC is the same all over the world. UTC is the scientific name for what is commonly called GMT (Greenwich Mean Time), the time at the 0 (root) line of longitude at Greenwich, England. In 1967, an international agreement established the length of a second as the duration of 9,192,631,770 oscillations of the cesium atom. The adoption of the atomic second led to the coordination of clocks around the world and the establishment of UTC in 1972. The Time and Frequency Division of the National Institute of Standards and Technologies (NIST) (see hnp://www.boulder.nist.gov/timefreq) is responsible for coordinating UTC with the International Bureau of Weights and Measures (BIPM) in Paris.

UTC timing is readily available to individual PCs through GPS cards. For example, TrueTime, Inc.'s (Santa Rosa, California) PCI-SG provides precise time, with zero latency, to computers that have PCI extension slots. Another way by which UTC can be provided over a network is by using the Network Time Protocol (IVTP) [D. Mills, "Network Time Protocol" (version 3) *IETF RFC 1305*]. However, the clock accuracy of NTP is not adequate for inter-switch coordination, on which this invention is based.

In accordance with the present invention, the synchronization requirements are independent of the physical link transmission speed, while in circuit switching the synchronization becomes more and more difficult as the link speed increases.

In accordance with the present invention, timing information is not used for routing, and therefore, in the Internet, for example, the routing is done using IP addresses or an IP tag/label.

In accordance with the present invention, timing information is provided by using a Common Time Reference (CTR) signal, one such source is the above mentioned GPS. CTR is used for the timely forwarding over links with plurality of different time frame durations: TF1, TF2, and so on. Employing different time frame durations are useful in heterogeneous networks with widely varying link speeds, as shown in the following table. That is, the number of bytes that can be transmitted during one time frame of, say, 500/125/12.5 microseconds changes according to the link capacity.

| **Link capacity** | | **Number of bytes per TFs -125 microseconds** | **Number of bytes per TFs - 500 microseconds** | **Number of bytes per TFs - 12.5 microseconds** |
|---|---|---|---|---|
| | 10 | 156,250 | 625,000 | 15,625 |
| Gb/s | | | | |
| | 1 | 15,625 | 62,500 | 1,562 |
| Gb/s | | | | |
| | 155 | 2,420 | 9,680 | 242 |
| Mb/s | | | | |
| | 45 | 703 | 2,812 | 70 |
| Mb/s | | | | |

In accordance with the present invention, the synchronous virtual pipes (SVPs) are accessed by end-stations that are located across a shared media network. The shared media network can be of various types: IEEE P1394 and Ethernet for desktop computers and room area networks, cable modem head-end (e.g., DOCSIS, IEEE 802.14), wireless base-station (e.g., IEEE 802.11), and Storage Area Network (SAN) (e.g., FC-AL, SSA). The end-station can be of corresponding various types: for IEEE 1394: video cameras, VCR and video disk; for cable modem: set-top box with multiple Ethernet connections to video cameras, VCRs; for wireless: desktop computers and mobile units; and for SAN: disk drives, tape drives, RAM disks, electronic disks, and other storage devices. More specifically:
IEEE P1394 [*P1394 Standard for a High Performance Serial Bus.* IEEE P1394 Draft 8.0v4, November 21, 1995] - This standard describes a high speed, low cost serial bus suitable for use as a peripheral bus or a backup to parallel back-plane buses.
DOCSIS [*Data-Over-Cable Service Interface Specifications Radio Frequency Interface Specification,* SP-RFI-I04-980724]. The goal of this specification is to enable cable operators to deploy high-speed data communications systems on cable television systems. It provides definition, design, development and deployment of data-over-cable systems on an uniform, consistent, open, non proprietary, multi-vendor interoperable basis. The intended service will allow transparent bi-directional transfer of Internet Protocol (IP) traffic, between the cable system head-end and customer locations, over an all-coaxial or hybrid fiber/coax (HFC) cable network.
IEEE 802.14 [*IEEE 802.14*/*a Draft 3 Revision 2 for Cable-TV access method and physical layer specification,* 1 August, 1998], this standard is intended to provide complete support of Asynchronous Transfer Mode (ATM). This support comprises supporting the following: (1) The ATM layer service, as defined in ITU-T Recommendation I.150, (2) Transport of ATM cells across the HFC MAC, (3) The five ATM Service Categories defined in the ATM Forum Traffic Management specification, along with their associated Quality-of Service and traffic contract parameters, (4) Point-to-point and unidirectional point-to-multipoint ATM virtual connection links, (5) ATM Virtual Path (VP) and Virtual Channel (VC) links which are concatenated with other VP- and/or VC- links to form VP connections or VC connections, (6) Permanent Virtual Connections (PVCs) and Switched Virtual Connections (SVCs), including support for the ATM Forum Signaling 4.0 specification for establishing and releasing SVCs and the Integrated Layer Management Interface (formerly, Interim Layer Management Interface).
IEEE 802.11 [*Wireless LAN Medium Access Control (MAC) and Physical Layer (PHY) specifications,* IEEE Std 802.11-1997] - the medium access control (MAC) and physical characteristics for wireless local area networks (LANs) are specified in this standard, part of a series of standards for local and metropolitan area networks. The medium access control unit in this standard is designed to support physical layer units as they may be adopted dependent on the availability of spectrum. This standard contains three physical layer units: two radio units, both operating in the 2400-2500 MHz band, and one base-band infrared unit One radio unit employs the frequency-hopping spread spectrum technique, and the other employs the direct sequence spread spectrum technique.

There are several variants of Storage Area Network (SAN), for example: (1) ANSI standard X3T11, FC-AL - Fiber Channel Arbitrated Loop [see, for example, Robert W. Kembel, *Arbitrated Loop,* Connectivity Solutions, 1997], and (2) ANSI standard X3T10, SSA - Serial Storage Architecture [see, for example, *Serial Storage Architecture A Technology Overview, Version 3.0,* SSA Industry Association 1995]. SAN provides connectivity for a wide variety of storage devices, such as, disk drives, tape drives, RAM disks, electronic disks, and other storage devices. The underlying network for SSA is a ring network with concurrent access and spatial bandwidth reuse [Y. Ofek, *Overview of the MetaRing Architecture,* Computer Networks and ISDN Systems, VoL 26, Nos. 6-8, March 1994, pp. 817-830], thus, a plurality of end-stations can send data packets to this type shared media network at the same time.

Fiber Channel (FC) - ANSI X3T11, using the arbitrated loop (AL) topology (abbreviated FC-AL) as a replacement for Small Computer Storage Interface (SCSI). Serial Storage Architecture (SSA) is a standard for peripheral interconnections, bringing with it higher levels of performance, availability, fault tolerance, and connectivity at low cost. FC-AL and SSA are high performance serial interfaces designed to connect disk drives, optical drives, tape drives, CD-ROMs, printers, scanners, and other peripherals to personal computers, workstations, servers, and storage subsystems. SSA and FC-AL facilitate migration from current SCSI equipment and will accommodate implementation of future configurations, including the use of fiber-optic connections.

These and other aspects and attributes of the present invention will be discussed with reference to the following drawings and accompanying specification.

In accordance with the present invention, a system is disclosed providing virtual pipes that carry streams of real-time traffic to/from Voice over Internet Protocol (VoIP) gateways over packet switching networks with timely forwarding and delivery. Consequently, between any two VoIP gateways the performance parameters, such as, loss, delay and jitter, have deterministic guarantees. The system combines the advantages of both circuit and packet switching. It provides for allocation for the exclusive use of predefined connections and for those connections it guarantees loss free transport with low delay and jitter. When predefined connections do not use their allocated resources, other non-reserved data packets can use them without affecting the performance of the predefined connections.

These and other aspects and attributes of the present invention will be discussed with reference to the following drawings and accompanying specification.

### BRIEF DESCRIPTION OF THE DRAWINGS:

FIG. 1 is a schematic block diagram of the multiple time base synchronous virtual switch of the present invention;
FIG. 2 is a timing diagram relating the common time reference (CTR) that is aligned to UTC and super-cycles, time cycles, and multiple sizes of time frames as used in the present invention;
FIG. 3 is a schematic block diagram of a synchronous virtual pipe as used in the present invention;
FIG. 4 is a timing diagram illustrating periodic scheduling and forwarding as used in the present invention;
FIG. 5A is a schematic block diagram of the link layer of a synchronous virtual pipe of the present invention;
FIG. 5B is a data word encoding table of the present invention;
FIG. 5C is a control word encoding table of the present invention;

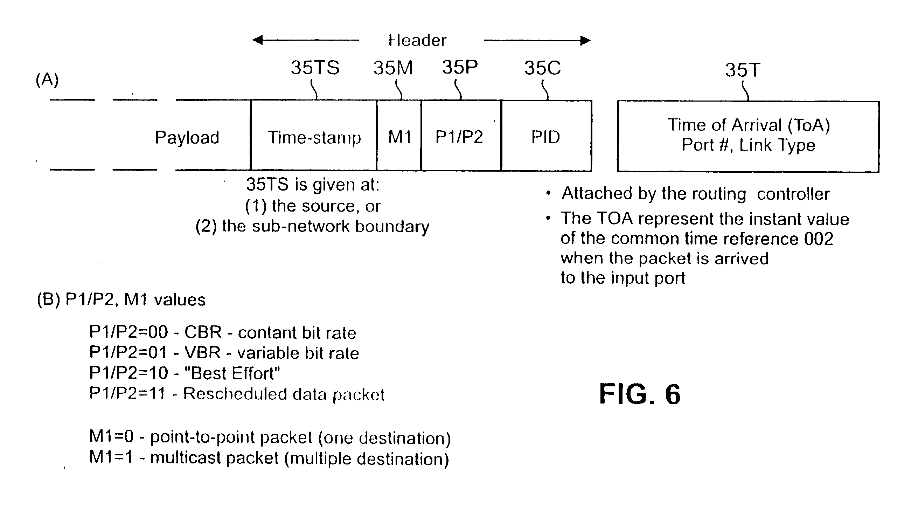

FIG. 6A is an illustration of the structure of a data packet with header as used in the present invention;
FIG. 6B is an illustration in detail of specific fields in the header of FIG. 6A;
FIG. 7 is a schematic block diagram of an input port of the multiple time base synchronous virtual switch of the present invention;

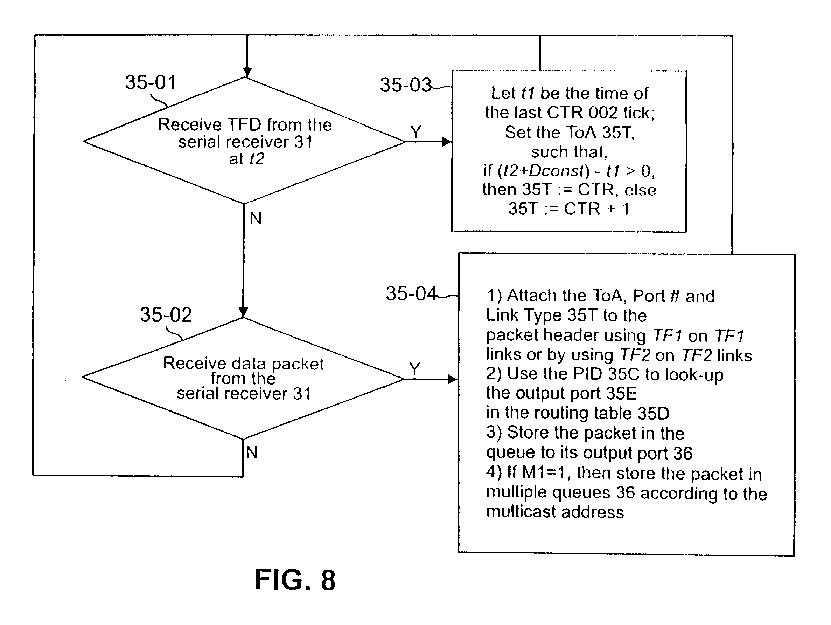

FIG. 8 is a flow diagram illustrating the operation of the routing controller of the present invention;
FIG. 9 is a schematic block diagram of an output port of the multiple time base synchronous virtual pipe switch of the present invention;
FIG. 10 is a schematic block diagram of the scheduling controller and transmit buffer of the present invention;

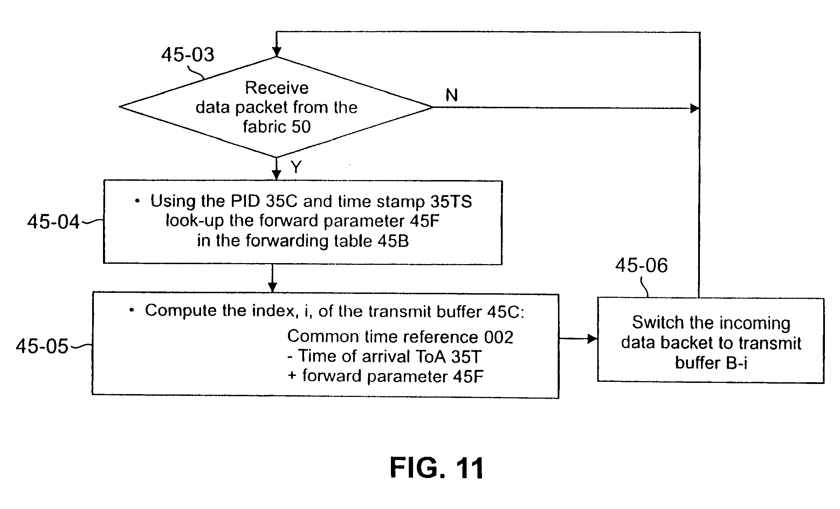

FIG. 11 is a flow diagram illustrating the operation of the scheduling controller of the present invention;

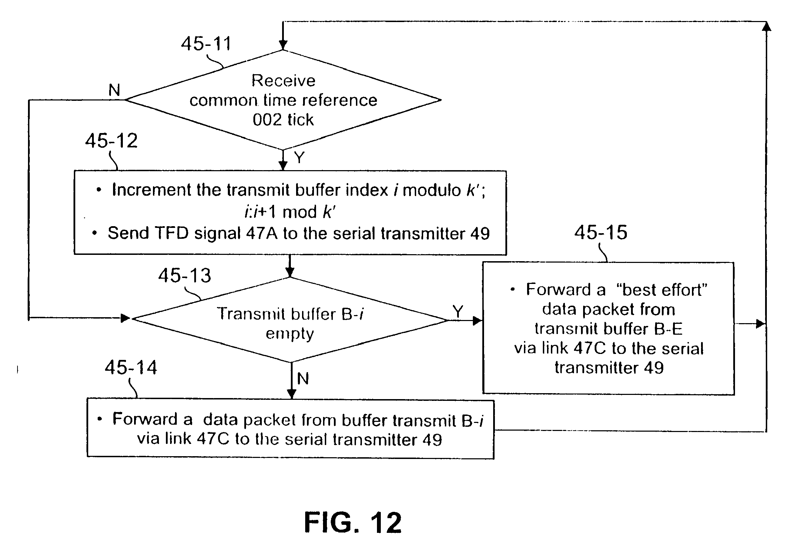

FIG. 12 is a flow diagram illustrating the operation of the select buffer and time-driven preemption controller of the present invention;

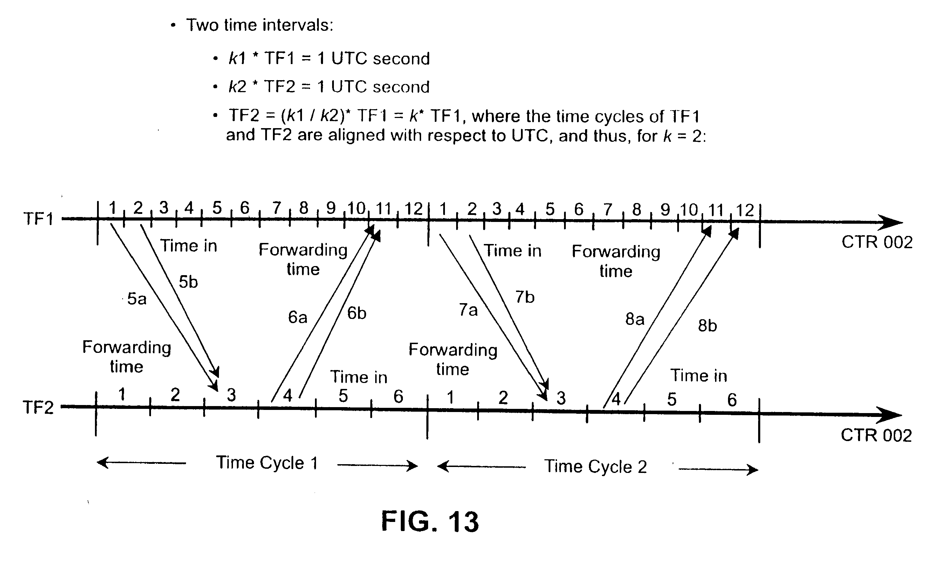

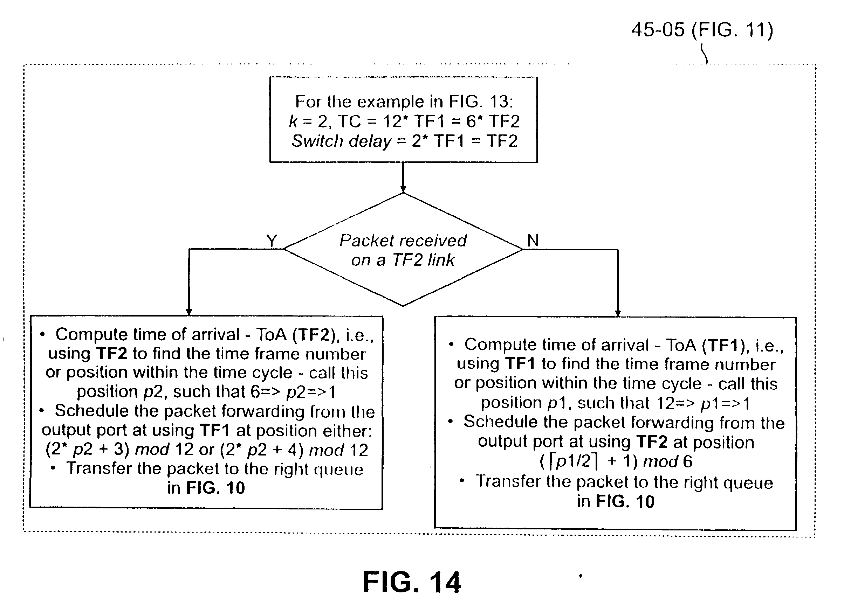

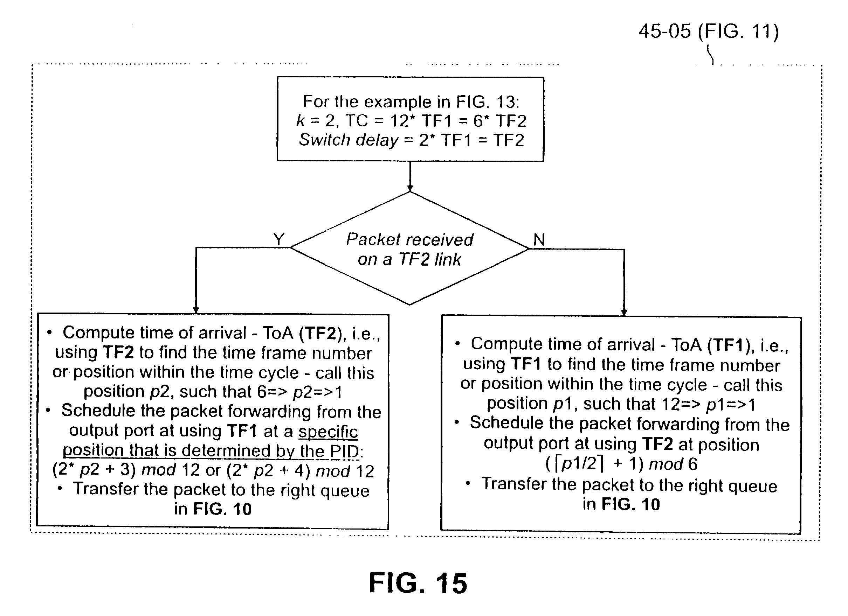

FIG. 13 is a timing diagram illustrating timely periodic transmission of data packets across multiple time bases as in the present invention;
FIG. 14 is a flow diagram illustrating additional detail of the operation of the scheduling controller of the present invention;
FIG. 15 is a flow diagram illustrating additional detail of the operation of an alternate embodiment of the scheduling controller of the present invention;

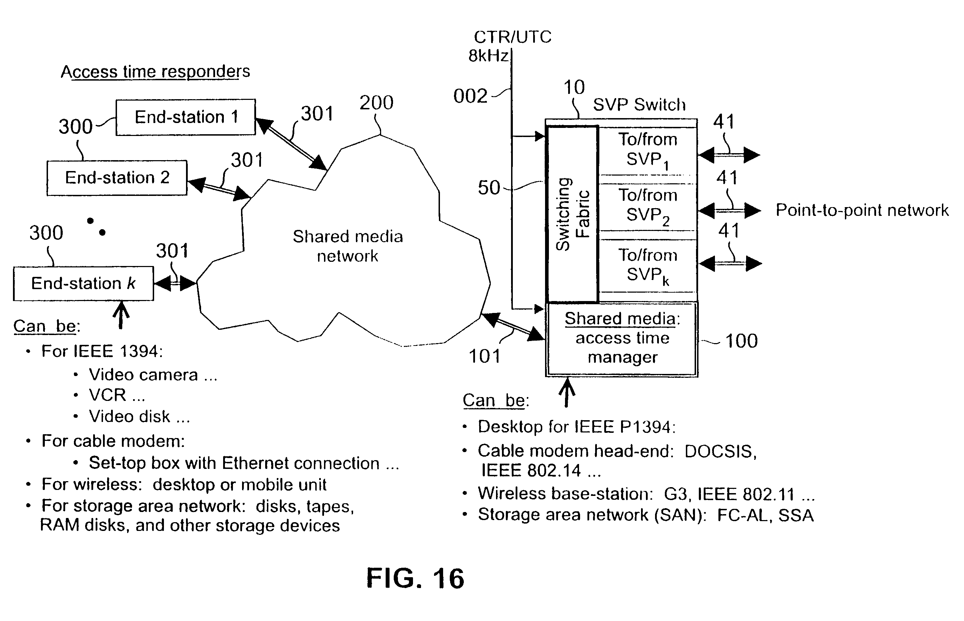

FIG. 16 is a schematic block diagram of the shared media network of the present invention;
FIG. 17 is a schematic block diagram of an alternate embodiment of the shared media network of the present invention;

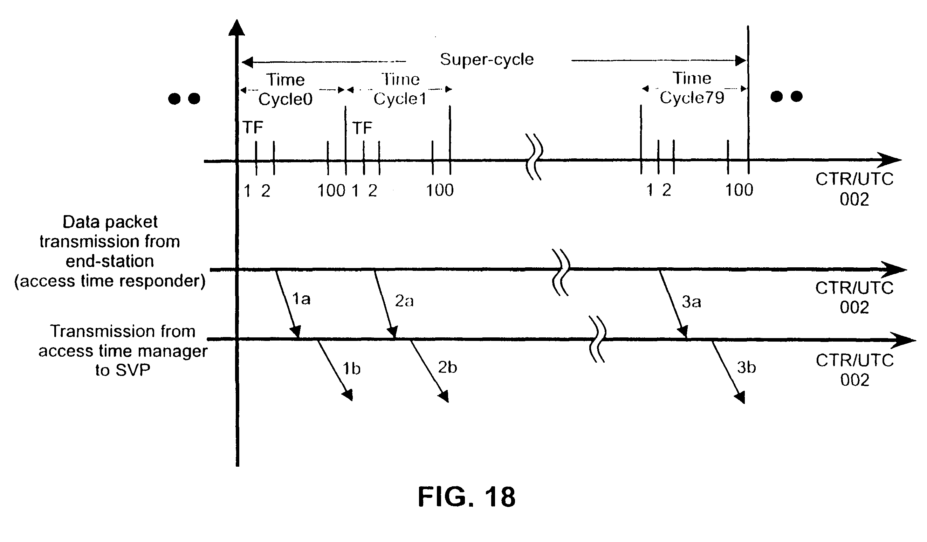

FIG. 18 is a timing diagram illustrating timely periodic transmission of data across the shared media network as in the present invention;
FIG. 19 is a timing diagram illustrating timely periodic reception of data across the shared media network as in the present invention;
FIG. 20 illustrates the protocol used to schedule transmission access to the shared media network as used in the present invention;
FIG. 21 illustrates the protocol used to schedule reception access to the shared media network as used in the present invention;
FIG. 22A is an illustration of the types and organization of data contained within the request messages in one embodiment of the present invention;
FIG. 22B is an illustration of the types and organization of data contained within the schedule messages in one embodiment of the present invention;
FIG. 23 is a timing diagram illustrating the end-to-end synchronization within synchronous virtual pipe as provided by the present invention;
FIG. 24A is a schematic block diagram of an end-to-end communication utilizing the shared media network of the present invention;
FIG. 24B is a timing diagram illustrating the timely transmission of data in the communication shown in FIG. 24A;
FIG. 25A is a timing diagram illustrating the constant data rate requirements of a data stream having simple isochronous periodicity; and
FIG. 25B is a timing diagram illustrating the varying data rate requirements of a data stream having complex isochronous periodicity.
FIG. 26 is a schematic block diagram of a VoIP gateway of the present invention;
FIG. 27 is a schematic block diagram of a synchronous virtual pipe interface to a VoIP gateway as provided by the present invention;
FIG. 28 is a timing diagram illustrating processing, assembling of packets of digital samples, and on-time transmission of the data packets of the present invention;
FIG. 29 is a timing diagram illustrating the receipt, separation of samples from the packet, and other processing of packets of data of the present invention;
FIG. 30 is a timing diagram illustrating multiplexing of multiple streams or calls into one data packet in the present invention;
FIG. 31 is a timing diagram illustrating demultiplexing of data packets into multiple streams or calls in the present invention;
FIG. 32 illustrates both a schematic block diagram of an end-to-end VoIP connection and a timing diagram illustrating the timing of same schematic block diagram providing synchronized VoIP operation as in the present invention;
FIG. 33 is a schematic block diagram of time frame call multiplexing using headerless time-based routing of the present invention;
FIG. 34 is a timing diagram of the headerless time-based routing of the present invention.

### DETAILED DESCRIPTION OF THE PREFERRED EMBODIMENT:

While this invention is susceptible of embodiment in many different forms, there is shown in the drawing, and will be described herein in detail, specific embodiments thereof with the understanding that the present disclosure is to be considered as an exemplification of the principles of the invention and is not intended to limit the invention to the specific embodiments illustrated.

The present invention relates to a system and method for transmitting and forwarding packets over a packet switching network The switches of the network maintain a common time reference, which is obtained either from an external source (such as GPS-Global Positioning System) or is generated and distributed internally. The common time reference is used to define time intervals, which include time super-cycles, time cycles, time frames, time slots, and other kinds of time intervals. The time intervals are arranged both in simple periodicity and complex periodicity (like seconds and minutes of a clock).

A packet that arrives to an input port of a switch, is switched to an output port based on specific routing information in the packet's header (e.g., IPv4 destination address in the Internet, VCI/VPI labels in ATM). Each switch along a route from a source to a destination forwards packets in periodic time intervals that are predefined using the common time reference. Each link connecting switches along the route from source to destination may use identical time intervals. Alternatively, each link connecting switches along the route from source to destination may use different time intervals generated from or otherwise related to the common time reference.

A time interval duration can be longer than the time duration required for communicating a packet, in which case the exact position of a packet in the time interval is not predetermined. A packet is defined to be located within the time interval which contains the communication of the first bit of the packet, even if the length of the packet is sufficiently long to require multiple time intervals to communicate the entire packet.

Packets that are forwarded inside the network over the same route and in the same periodic time intervals constitute a virtual pipe and share the same pipe-ID. A pipe-ID can be either explicit, such as a tag or a label that is generated inside the network, or implicit such as a group of IF addresses. A virtual pipe can be used to transport data packets from multiple sources and to multiple destinations. The time interval in which a switch forwards a specific packet is determined by the packet's pipe-ID, the time it reaches the switch, and the current value of the common time reference.

A virtual pipe provides deterministic quality of service guarantees to the packets that are travelling through it. In accordance with the present invention, congestion-free packet switching is provided for pipe-IDs in which capacity in their corresponding forwarding links and time intervals is reserved in advance. Furthermore, packets that are transferred over a virtual pipe reach their destination in predefined time intervals, which guarantees that the delay jitter or delay uncertainty is smaller than or equal to one time interval.

A system is provided for managing data transfer of data packets from a source to a destination. The transfer of the data packets is provided during a predefined time interval, comprised of a plurality of predefined time frames. The system is further comprised of a plurality of switches. A virtual pipe is comprised of at least two of the switches interconnected via communication links in a path. A common time reference signal is coupled to each of the switches, and a scheduling controller maps selected predefined time frames for transfer into and out from each of the respective switches responsive to the common time reference signal. Each communications link may use a different time frame duration generated from the common time reference signal.

Different time frame durations can be required when utilizing communications links of differing bandwidth or capacity. For example, common communications links today include slow links, such as DS1 or T1 that are inherently limited to about 1.5 Mbit/s of bandwidth, and faster links, such as an OC-3 channel that has 155 Mbit/s of bandwidth. A time frame suitable for a T1 link may prove to be interminably long for an OC-3 link. Similarly, a time frame duration suitable for an OC-3 link may be too short to be useful on a T1 link. Similar circumstances arise with any two or more communications links of different capacity (e.g., DS0, T1, T3, OC-3, OC-12, and OC-48).

In general, a slower link speed suggests a longer time frame duration, and a faster link speed suggests a shorter time frame duration, but the time frame duration does not need to be adjusted to meet these suggestions. Any number of links having different capacities may share the same time frame duration. Conversely, different time frame durations could be selected for various ones of a plurality of links all having the same identical bandwidth. The present invention is directed to the case where the time frame durations are different on at least two of the communications links, irrespective of the capacity or available bandwidth of those links.

For each switch, there is a first predefined time frame within which a respective data packet is transferred into the respective switch, and a second predefined time frame within which the respective data packet is forwarded out of the respective switch, wherein the first and second predefined time frames may have different durations. The time assignment provides consistent fixed intervals between the time between the input to and output from the virtual pipe.

In a preferred embodiment, there is a predefined subset of the predefined time frames during which the data packets are transferred in the switch, and for each of the respective switches, there are a predefined subset of the predefined time frames during which the data packets are transferred out of the switch.

Each of the switches is comprised of one or a plurality of addressable input and output ports. A routing controller maps each of the data packets that arrives at each one of the input ports of the respective switch to a respective one or more of the output ports of the respective switch.

For each of the data packets, there is an associated time of arrival to a respective one of the input ports. The time of arrival is associated with a particular one of the predefined time frames. For each of the mappings by the routing controller, there is an associated mapping by a scheduling controller, which maps of each of the data packets between the time of arrival and forwarding time out The forwarding time out is associated with a specified predefined time frame.

In the preferred embodiment, there are a plurality of the virtual pipes comprised of at least two of the switches interconnected via communication links in a path. The communication link is a connection between two adjacent switches; and each of the communications links can be used simultaneously by at least two of the virtual pipes. Multiple data packets can be transferred utilizing at least two of the virtual pipes.

In some configurations of this invention there is a fixed time difference, which is constant for all switches, between the time frames for the associated time of arrival and forwarding time out for each of the data packets. The fixed time difference is a variable time difference for some of the switches. A predefined interval is comprised of a fixed number of contiguous time frames comprising a time cycle. Data packets that are forwarded over a given virtual pipe are forwarded from an output port within a predefined subset of time frames in each time cycle. Furthermore, the number of data packets that can be forwarded in each of the predefined subset of time frames for a given virtual pipe is also predefined.

In some other configurations of this invention a virtual pipe can be constructed of communication links each with different time frame and/or time cycle duration. Furthermore, a communication link can be used by plurality of pipes each with different time frame duration and/or different time cycle duration.

The time frames associated with a particular one of the switches within the virtual pipe are associated with the same switch for all the time cycles, and are also associated with one of input into or output to or from the particular respective switch. Note that each input or output port can be associated with different time frame duration and/or different time cycle interval.

In a more general construction of the present invention, a time cycle can be constructed of a reoccurring sequence of time frames, where each time frame can have different time duration. In this case, the time frame duration depends on the time frame position within the time cycle. This implies that two consecutive time frames within the same time cycle can have different time frame durations.

In some configurations of this invention there is a constant fixed time between the input into and output from a respective one of the switches. This fixed time can measured by using either the time frame duration on the input link or the time frame duration on the output link. Furthermore, this fixed time is reoccurring within each of the time cycles. A fixed number of contiguous time cycles comprise a super cycle, which is periodic. Data packets that are forwarded over a given communications link are forwarded from an output port within a predefined subset of time frames in each super cycle. Furthermore, the number of data packets that can be forwarded in each of the predefined subset of time frames within a super cycle for a given communications link is also predefined.

In the preferred embodiment the common time reference signal is coupled from a GPS (Global Positioning System), and is in accordance with the UTC (Coordinated Universal Time) standard. The UTC time signal does not have to be received directly from GPS. Such signal can be received by a switch by using various means, as long as the delay or time uncertainty associated with that UTC time signal does not exceed half of the shortest time frame duration that is associated with that switch.

In one embodiment, the super cycle duration is equal to one second as measured using the UTC (Coordinated Universal Time) standard. In an alternate embodiment the super cycle duration spans multiple UTC seconds. In another alternate embodiment the super cycle duration is a fraction of a UTC second. In the most preferred embodiment, the super-cycle duration is a small integer number of UTC seconds.

The communication links can be of fiber optic, copper, and wireless communication links for example, between a ground station and a satellite, and between two satellites orbiting the earth. The communication link between two nodes does not have to be a serial communication link. A parallel communication link can be used - such link can simultaneously carry multiple data bits, associated clock signal, and associated control signals.

The data packets can be Internet protocol (IP) data packets, and asynchronous transfer mode (ATM) cells, and can be forwarded over the same virtual pipe having an associated pipe identification (PID). The PID can be an Internet protocol (IP) address, Internet protocol group multicast address, an asynchronous transfer mode (ATM), a virtual circuit identifier (VCI), and a virtual path identifier (VPI), or (used in combination as VCI/VPI).

The routing controller determines three possible associations of an incoming data packet: (1) the output port, (2) the link type, characterized by the time frame, time cycle and super cycle durations that are associated with it, and (3) the time of arrival (ToA). The ToA is then used by the scheduling controller for determining when a data packet should be forwarded by the select buffer and time-driven preemption controller to the next switch in the virtual pipe. The routing controller utilizes at least one of Internet protocol version 4 (IPv4), Internet protocol version 6 (IPv6) addresses, Internet protocol group multicast address, Internet MPLS (multi protocol label swapping or tag switching) labels, ATM virtual circuit identifier and virtual path identifier (VCI/VPI), and IEEE 802 MAC (media access control) addresses, for mapping from an input port to an output port.

Each of the data packets is comprised of a header, which includes an associated time stamp. For each of the mappings by the routing controller, there is an associated mapping by the scheduling controller, of each of the data packets between the respective associated time-stamp and an associated forwarding time out, which is associated with one of the predefined time frames. The time stamp can record the time in which a packet was created by its application.

In one embodiment the time stamp is generated by an Internet real-time protocol (RTP), and by a predefined one of the sources or switches. The time stamp can be used by a scheduling controller in order to determine the forwarding time of a data packet from an output port.

Each of the data packets originates from an end station, and the time stamp is generated at the respective end station for inclusion in the respective originated data packet. Such generation of a time stamp can be derived from UTC either by receiving it directly from GPS or by using the Internet's Network Time Protocol (NTP). Alternatively, the time stamp can be generated at a sub-network boundary or at the boundary of the synchronous virtual pipe.

In accordance with the present invention, a system is provided for transferring data packets across a data network while maintaining for reserved data traffic constant bounded jitter (or delay uncertainty) and no congestion-induced loss of data packets. Such properties are essential for many multimedia applications, such as, telephony and video teleconferencing.

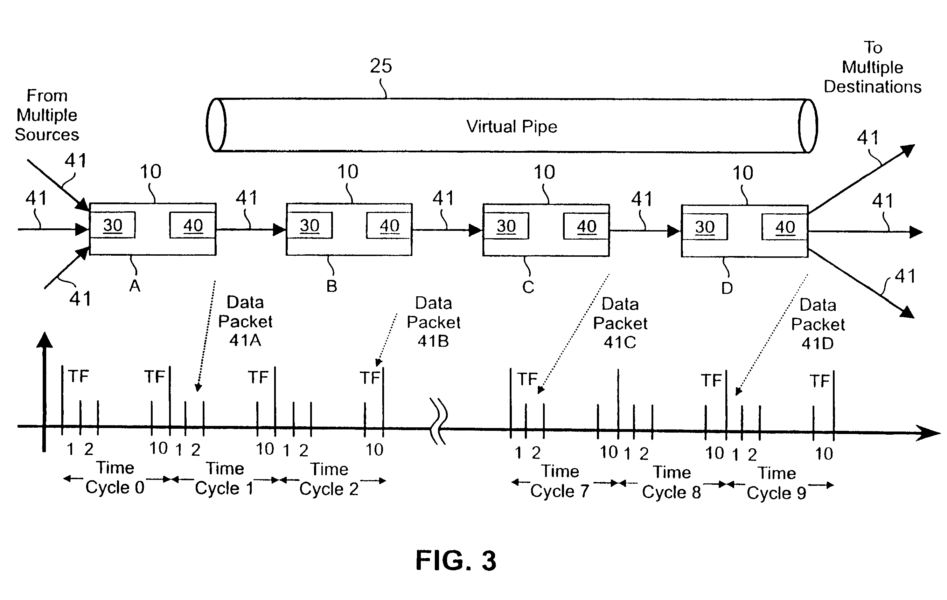

In accordance with the design, method, and illustrated implementation of the present invention, one or a plurality of virtual pipes **25** are provided, as shown in FIG. 3, over a data network with general topology. Such data network can span the globe. Each virtual pipe **25** is constructed over one or more switches **10**, shown in FIG. 3, which are interconnected via communication links **41** in a path.

FIG. 3 illustrates a virtual pipe **25** from switch **A,** through switches **B** and **C,** and ending at switch D. The virtual pipe **25** transfers data packets from at least one source to at least one destination. As shown, switch **A** may accept data from a plurality of sources via communications links **41.** Also as shown, switch **D** may output data to a plurality of destinations via communications links **41.**

The data packet transfers over the virtual pipe **25** via switches **10** are designed to occur during a plurality of predefined time intervals, wherein each of the predefined time intervals is comprised of a plurality of predefined time frames. The timely transfers of data packets are achieved by coupling a common time reference signal (not shown) to each of the switches **10.**

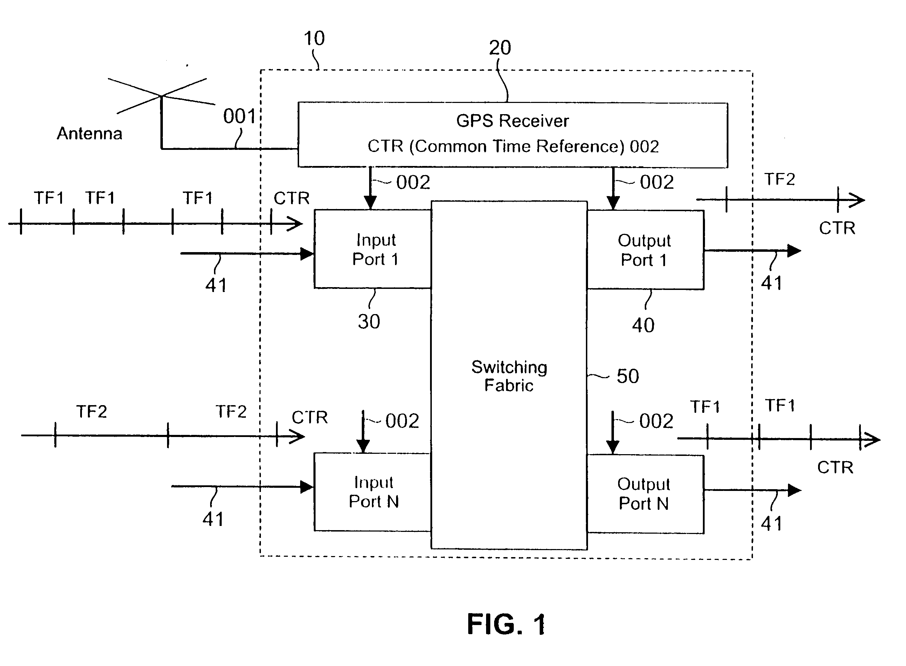

FIG. 1 is a schematic block diagram of the multiple frame duration synchronous virtual pipe (SVP) switch **10** of the present invention. The SVP switch **10** comprises a common time reference means **20,** at least one input port **30,** at least one output port **40,** and a switching fabric **50.** In the preferred embodiment, the common time reference means **20** is a GPS receiver that receives a source of common time reference **001** (e.g., UTC via GPS) via an antenna as illustrated. The common time reference means **20** provides a common time reference signal **002** to all input ports **30** and all output ports **40.** GPS time receivers are available from variety of manufacturers, such as, TrueTime, Inc. (Santa Rosa, CA). With such equipment, it is possible to maintain a local clock with accuracy of ±1 microsecond from the UTC (Coordinated Universal Time) standard everywhere around the globe.

Each respective one of the input ports **30** is coupled to the switching fabric **50.** Each respective one of the output ports **40** is coupled to the switching fabric **50.**

The SVP switch 10 of FIG. 1 is also coupled to one or more communications links 41 by way of input and output ports **30** and **40,** respectively. The communications links 41 can be implemented within an IP network.

In the present invention, the communications links **41** need not share the same time frame duration. Each of the communications links **41** may have a time frame of a different duration. As illustrated in FIG. 1, some of the communications links have a time frame duration of **TF1,** and some others of the communications links have a time frame duration of **TF2.** The present invention is not limited to two different time frame durations. Any number of different time frame durations may be accommodated by the multiple frame duration SVP switch of the present invention.

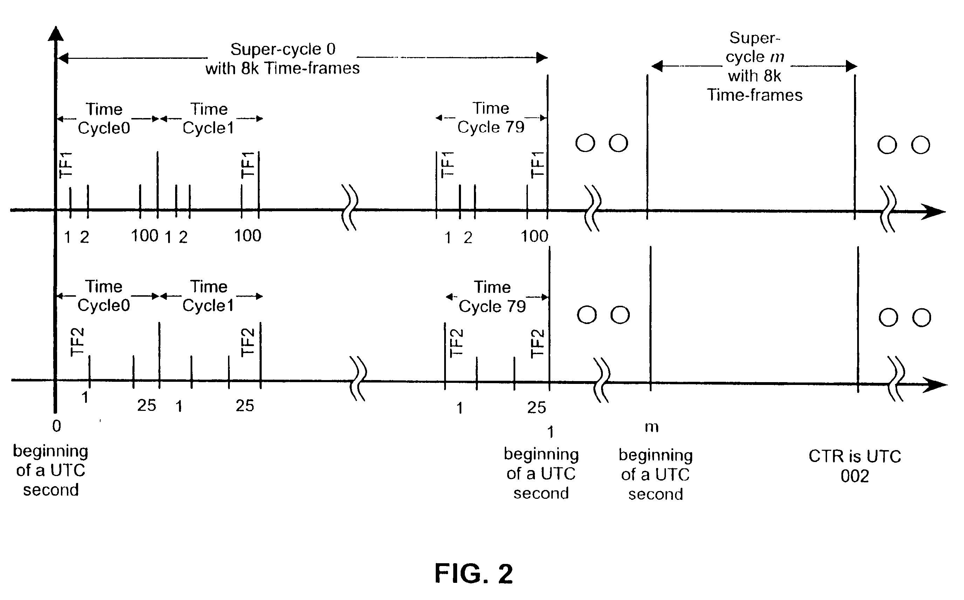

FIG. 2 is a timing diagram relating the common time reference (CTR) that is aligned to UTC and super-cycles, time cycles, and multiple sizes of time frames as used in the present invention. The top horizontal axis details the timing of a communications link employing a first time frame duration. The bottom horizontal axis details the timing of a communications link employing a second time frame duration. Both axes are plotted with respect to the same common time reference.

As shown in FIG. 2, the communications link employing the first time frame duration comprises 80 time cycles within each super-cycle, with the time cycles numbered 0 through 79. Within each of the time cycles are 100 time frames of duration **TF1,** numbered 1 through 100. The duration of the time frame **TF1** is selected to be 125 microseconds, thus determining a time cycle to be 12.5 milliseconds and a super-cycle of exactly one UTC second.

As shown in FIG. 2, the communications link employing the second time frame duration comprises 80 time cycles within each super-cycle, with the time cycles numbered 0 through 79. Within each of the time cycles are 25 time frames of duration **TF2,** numbered from 1 through 25. The duration of the time frame **TF2** is selected to be 500 microseconds, thus determining a time cycle to be 12.5 milliseconds and a super-cycle of exactly one UTC second.

For scheduling of data transfer between two communications links, it is obviously most convenient if they share the same time frame duration. If they have different time frame durations, it is convenient to pick those durations and numbers of time frames per time cycle so that they share the same time cycle duration and super-cycle duration (as in the example shown in FIG. 2). If two communications links have different time frame durations and different time cycle durations, the respective durations and numbers of time frames and time cycles within a super-cycle should be selected to permit both communications links to share the same overall super-cycle duration.

FIG. 2 also illustrates how the common time reference signal can be aligned with the UTC (Coordinated Universal Time) standard. In this illustrated example, the duration of every super-cycle is exactly one second as measured by the UTC standard. Moreover, as shown in FIG. 2 the beginning of each super-cycle coincides with the beginning of a UTC second. Consequently, when leap seconds are inserted or deleted for UTC corrections (due to changes in the earth rotation period) the cycle and super-cycle periodic scheduling will not be affected. The time frames, time cycles, and super-cycles are associated in the same manner with all respective switches within the virtual pipe at all times.

In the embodiment illustrated in FIG. 2, the super-cycle duration is equal to one second as measured using the UTC (Coordinated Universal Time) standard. In an alternate embodiment the super-cycle duration spans multiple UTC seconds. In another alternate embodiment the super-cycle duration is a fraction of a UTC second. In the most preferred embodiment, the super-cycle duration is a small integer number of UTC seconds.

Pipeline forwarding relates to data packets being forwarded across a virtual pipe **25** with a predefined delay in every stage (either across a communication link **41** or across a switch 10 from input port **30** to output port **40**). Data packets enter a virtual pipe **25** from one or more sources and are forwarded to one or more destinations.

Referring to FIG. 3, the timely pipeline forwarding of data packets over the virtual pipe **25** is illustrated. In this example, time cycles each uniformly contain 10 time frames, and for clarity the super-cycles are not shown. A data packet is received by one of the input ports **30** of switch A at time frame 1, and is forwarded along this virtual pipe **25** in the following manner. (i) the data packet **41A** is forwarded from the output port **40** of switch A at time frame 2 of time cycle 1, (ii) the data packet **41B** is forwarded from the output port **40** of switch B, after 18 time frames, at time frame **10** of time cycle 2, (iii) the data packet **41C** is forwarded from the output port **40** of switch C, after 42 time frames, at time frame 2 of time cycle 7, and (iv) the data packet **41D** is forwarded from the output port **40** of switch D, after **19** time frames, at time frame 1 of time cycle 9.

As illustrated in FIG. 3,
- All data packets enter the virtual pipe **25** (i.e., forwarded out of the output port **40** of switch A) periodically at the second time frame of a time cycle, are output from this virtual pipe **25** (i.e., are forwarded out of the output port **40** of switch **D**) after 79 time frames.
- The data packets that enter the virtual pipe **25** (i.e., forwarded out of the output port **40** of switch **A**) can come from one or more sources and can reach switch A over one or more input links **41.**
- The.data packets that exit the virtual pipe **25** (i.e., forwarded out of the output port **40** of switch **D**) can be forwarded over plurality of output links **41** to one of plurality of destinations.
- The data packets that exit the virtual pipe **25** (i.e., forwarded out of the output port **40** of switch **D**) can be forwarded simultaneously to multiple destinations, (i.e., multi-cast (one-to-many) data packet forwarding).
- The communication link **41** between two adjacent ones of the switches **10** can be used simultaneously by at least two of the virtual pipes.
- A plurality of virtual pipes can multiplex (i.e., mix their traffic) over the same communication links.
- A plurality of virtual pipes can multiplex (i.e., mix their traffic) during the same time frames and in an arbitrary manner.
- The same time frame can be used by multiple data packets from one or more virtual pipes.

For each virtual pipe there are predefined time frames within which respective data packets are transferred into its respective switches, and separate predefined time frames within which the respective data packets are transferred out of its respective switches. Though the time frames of each virtual pipe on each of its switches can be assigned in an arbitrary manner along the common time reference, it is convenient and practical to assign time frames in a periodic manner in time cycles and super-cycles.

The switch **10** structure, as shown in FIG. 1, can also be referred to as a pipeline switch, since it enables a network comprised of such switches to operate as a large distributed pipeline structure, as it is commonly found inside digital systems and computer architectures.

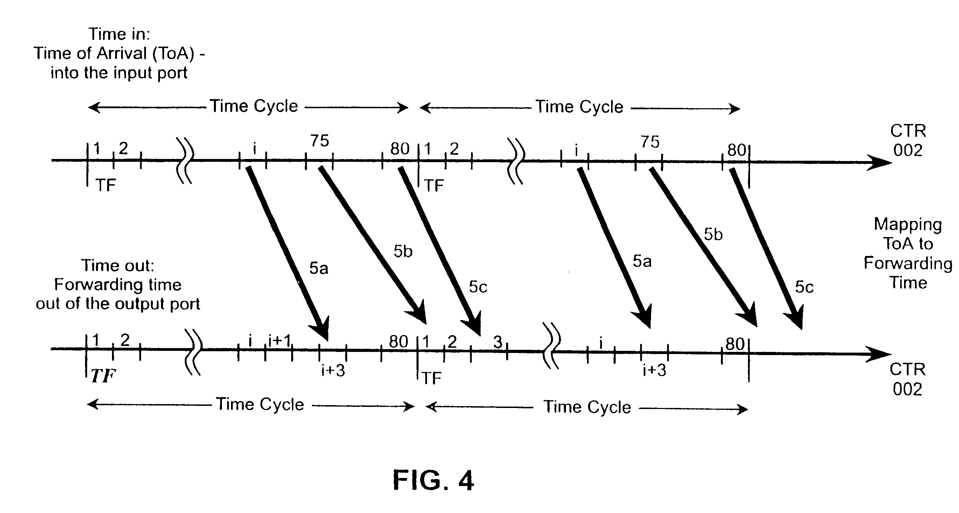

FIG. 4 illustrates the mapping of the time frames into and out of a node on a virtual pipe, wherein the mapping repeats itself in every time cycle illustrating the time in, which is the time of arrival (ToA), versus the time out, which is the forwarding time out of the output port. FIG. 4 thereby illustrates the periodic scheduling and forwarding timing of a switch of a virtual pipe wherein there are a predefined subset of time frames (i, 75, and 80) of every time cycle, during which data packets are transferred into that switch, and wherein for that virtual pipe there are a predefined subset time frames (*i*+3, 1, and 3) of every time cycle, during which the data packets are transferred out of that switch.

In the illustrated example of FIG. 4, a first data packet **5a** arriving at the input port of the switch at time frame i is forwarded out of the output port of the switch at time frame *i*+*3.* In this example the data packet is forwarded out of the output port at a later time frame within the same time cycle in which it arrived. The delay in transiting the switch. *dts,* determines a lower bound on the value (*i*+*dts*). In the illustrated example, *dts* must be less than or equal to 3.

Also as shown in FIG. 4, a second data packet **5b** arriving at the input port of the switch at time frame 75 is forwarded out of the output port of the switch at time frame 1 within the next time cycle. In this example the data packet is forwarded out of the output port at a earlier numbered time frame but within the next time cycle from which it arrived. Note that data packets in transit may cross time cycle boundaries.

If-for example-each of the three data packets has 125 bytes (i.e. 1000 bits), and there are 80 time frames of 125 microseconds in each time cycle (i.e. a time cycle duration of 10 milliseconds), then the bandwidth allocated to this virtual pipe is 300,000 bits per second. In general, the bandwidth or capacity allocated for a virtual pipe is computed by dividing the number of bits transferred during each of the time cycles by the time cycle duration. In the case of a bandwidth in a super-cycle, the bandwidth allocated to a virtual pipe is computed by dividing the number of bits transferred during each of the super-cycles by the super-cycle duration.

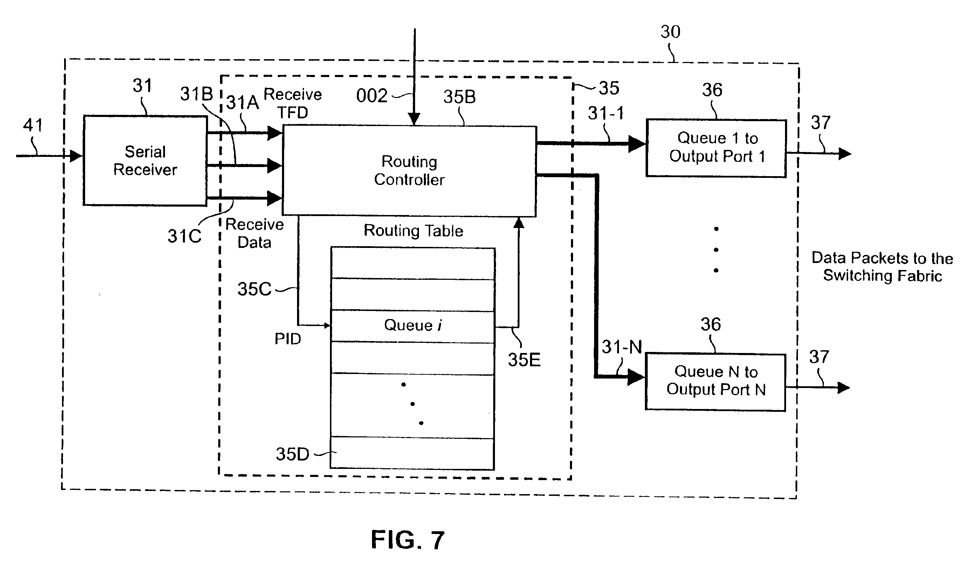

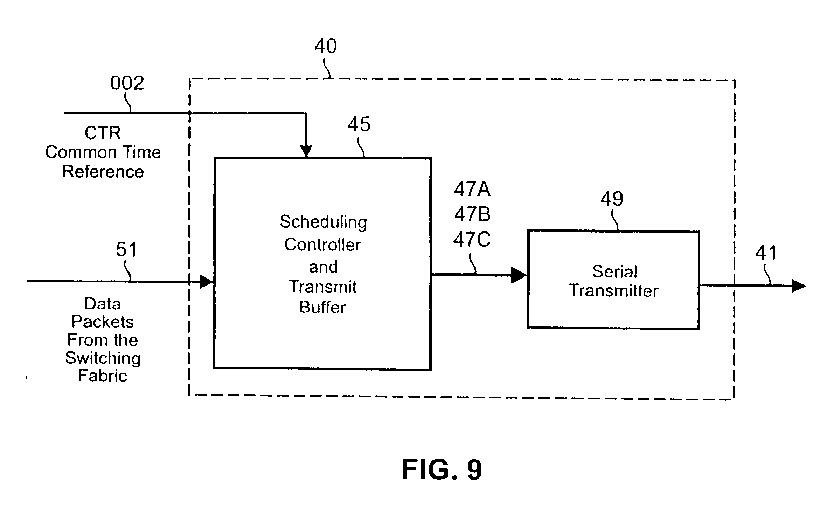

Each switch **10** is comprised of a plurality of addressable input ports **30** and output ports **40**. As illustrated in FIG. 7, the input port **30** is further comprised of a routing controller **35B** for mapping each of the data packets that arrives at each one of the input ports to a respective one of the queue to the output ports. As illustrated in FIG. 9, the output port **40** is further comprised of a scheduling controller and transmit buffer **45**.

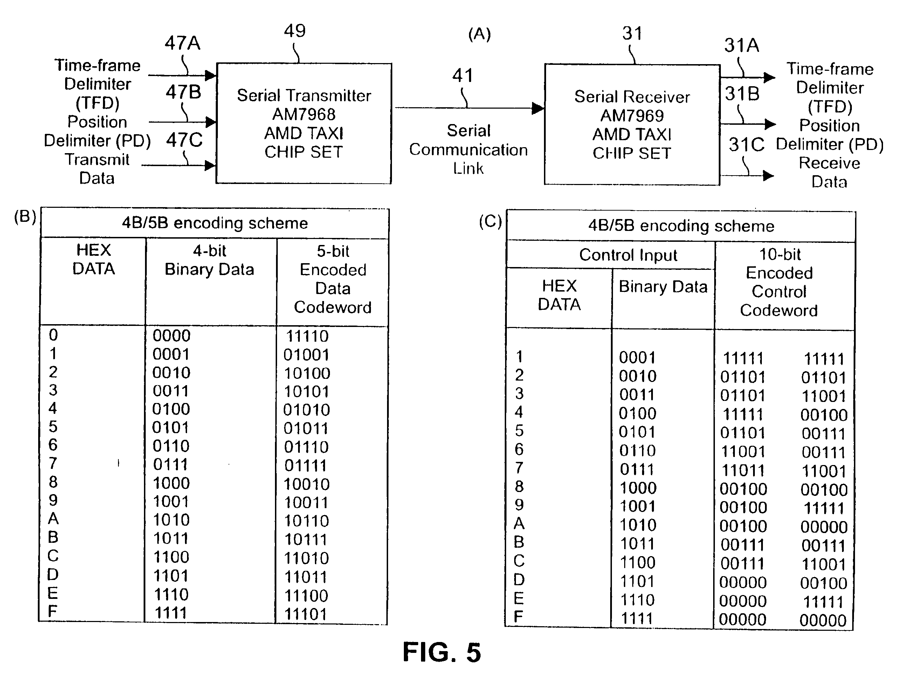

An output port **40** is connected to a next input port **30** via a communication link **41,** as shown in FIGS. 3 and 5A. The communication link can be realized using various technologies compatible with the present invention including fiber optic conduits, copper and other wired conductors, and wireless communication links-including but not limited to, for example, radio frequency (RF) between two ground stations, a ground station and a satellite, and between two satellites orbiting the earth, microwave links, infrared (IR) links, optical communications lasers. The communication link does not have to be a serial communication link. A parallel communication link can be used-such a parallel link can simultaneously carry multiple data bits, associated clock signals, and associated control signals.

As shown in FIG. 1, the common time reference **002** is provided to the input ports **30** and output ports **40** (comprising the input/output ports **30/40**) from the GPS time receiver **20**, which receives its timing signal from the GPS antenna **001**. GPS time receivers are available from variety of manufacturers, such as, TrueTime, Inc. (Santa Rosa, CA). With such equipment, it is possible to maintain a local clock with accuracy of ±1 microsecond from the UTC (Coordinated Universal Time) standard everywhere around the globe.

FIG. 5A is an illustration of a serial transmitter and a serial receiver. FIG. 5B is a table illustrating the 4B/5B encoding scheme for data, and FIG. 5C is a table illustrating the 4B/5B encoding scheme for control signals.

Referring to FIG. 5A, a serial transmitter **49** and serial receiver **31** are illustrated as coupled to each link **41**. A variety of encoding schemes can be used for a serial line link **41** in the context of this invention, such as, SONET/SDH, 8B/10B Fiber Channel, and 4B/5B Fiber Distributed Data Interface (FDDI). In addition to the encoding and decoding of the data transmitted over the serial link, the serial transmitter/receiver (**49** and **31**) sends/receives control words for a variety of in-band control purposes, mostly unrelated to the present invention description.

However, one control word, time frame delimiter (TFD), is used in accordance with the present invention. The TFD marks the boundary between two successive time frames and is sent by a serial transmitter **49** when a CTR **002** clock tick occurs in a way that is described hereafter as part of the output port operation.

It is necessary to distinguish in an unambiguous manner between the data words, which carry the information, and the control signal or words (e.g., the TFD is a control signal) over the serial link **41**. There are many ways to do this. One way is to use the known 4B/5B encoding scheme (used in FDDI). In this scheme, every 8-bit character is divided into two 4-bit parts and then each part is encoded into a 5-bit codeword that is transmitted over the serial link **41**.

In a preferred embodiment the serial transmitter **49** and receiver **31** comprise AM7968 and AM7969 chip sets, respectively, both manufactured by AND Corporation.

FIG. 5B illustrates an encoding table from 4-bit data to 5-bit serial codeword. The 4B/5B is a redundant encoding scheme, which means that there are more codeword than data words. Consequently, some of the unused or redundant serial codeword can be used to convey control information.

FIG. 5C is a table with 15 possible encoded control codeword, which can be used for transferring the time frame delimiter (TFD) over a serial link. The TFD transfer is completely transparent to the data transfer, and therefore, it can be sent in the middle of the data packet transmission in a non-destructive manner.

When the communication links **41** are SONET/SDH, the time frame delimiter cannot be embedded as redundant serial codeword, since SONET/SDH serial encoding is based on scrambling with no redundancy. Consequently, the TFD is implemented using the SONET/SDH frame control fields: transport overhead (TOH) and path overhead (POH). Note that although SONET/SDH uses a 125 microseconds frame, it cannot be used directly in accordance with the present invention, at the moment, since SONET/SDH frames are not globally aligned and are also not aligned to UTC. However, if SONET/SDH frames are globally aligned, SONET/SDH can be used compatibly with the present invention.

FIG. 7 is a schematic block diagram of an input port with a routing controller. As shown in FIG. 7, the input port **30** has several parts including: serial receiver **31,** a routing controller **35** and separate queues to the output ports **36.** The serial receiver **31** transfers the incoming data packets and the time frame delimiters to the routing controller **35**.

The controller **35** comprises a routing controller **35B** that is constructed of a central processing unit (CPU), a random access memory (RAM) for storing the data packet, read only memory (ROM) for storing the routing controller processing program; and a routing table **35D** that is used for determining the output port that the incoming data packet should be switched to.

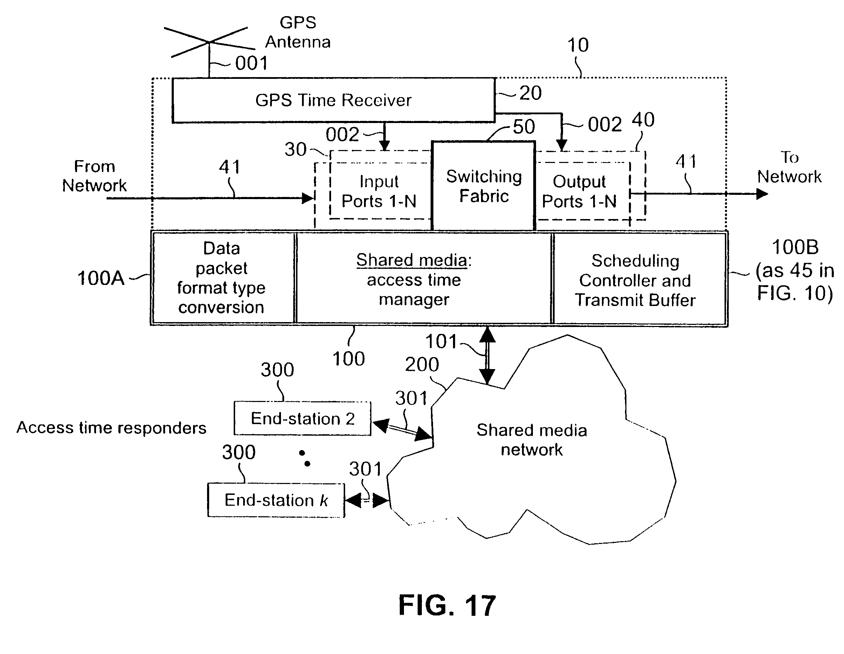

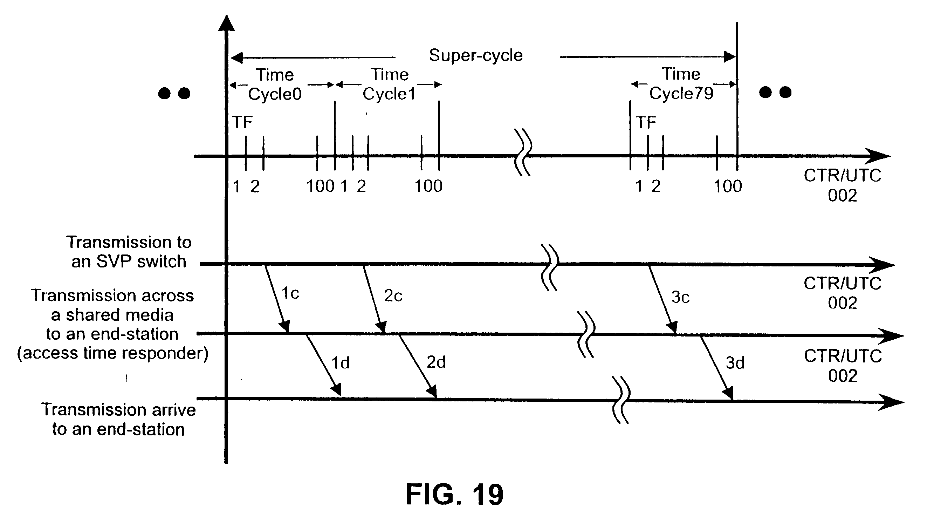

Referring simultaneously to both FIGS. 17 and 19, FIG. 19 illustrates the timing associated with the reception data packets of the present invention. The shared media access time manager **100** is responsive to receipt of data packets from a synchronous virtual pipe **41** via an input port **30.** The data packets are transmitted to arrive **1c** at the access time manager **100** regularly at predefined time frames in each time cycle, which is just after time frame 2 in the illustrated example.

The access time manager **100** is responsible for scheduling data packets arriving from the synchronous virtual pipe **41** via the input port **30** to be transmitted via the shared media network **200** to arrive at the shared media network end-stations **300** during particular time frames within a time cycle. The data packets are transmitted at time **1d** to arrive at the end-station.

The access time manager **100** reserves time frames and schedules itself to continue to transmit data packets starting at the same time frame within each time cycle. After each additional data packet **2c, 3c,** is received by the access time manager **100,** it is transmitted **2d, 3d** to the appropriate end-station **300** via the shared media network **200** at a consistent scheduled respective time frame.

The regularity of arriving data at the same time frame of each time cycle provides for uninterrupted receipt of digital data at the end-stations **300.** The jitter present in the received data packet arrival times is controlled by the common time reference to be small and well-bounded. In another embodiment of this invention, a data packet that arrives at the shared media network can be scheduled to be forwarded to multiple end-station either simultaneously at the same schedule or at multiple schedules.

The SMATM has a sub-component for processing a plurality of format types of data packets **100A.** This sub-component converts from a first format types of data packets to a second format types of data packets. The first and second format types can be one of: ATM, IP, fiber channel for FC-AL, SSA, DOCSIS, IEEE 802.14, and IEEE 802.11. This sub-component **100A** is also capable of converting format types of data packets of different sizes, thus the number of transmission schedules over the shared media network can be different than the number of transmission schedules over the point-to-point network in the synchronous virtual pipe (SVP). More specifically, if within a time cycle and a super cycle there are: (1) a first number of schedules for the transmission of data packets of the first format type and (2) a second number of schedules for the transmission of data packets of the second format type; then the sub-component **100A** by means of a predefined scheduling table converts: (1) the first number of schedules to the second number of schedules and (2) the second number of schedules to the first number of schedules.

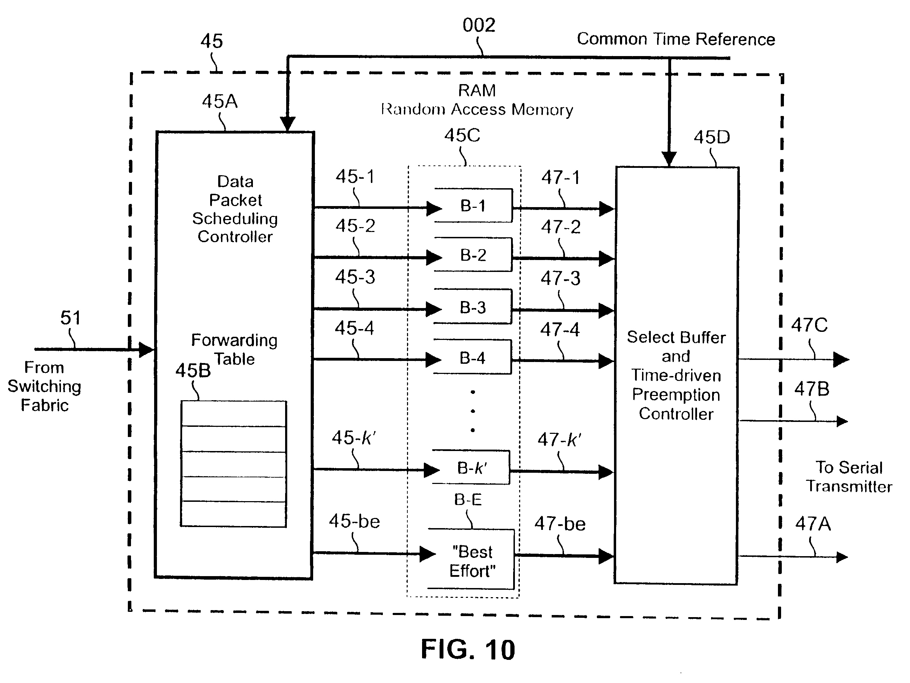

The SMATM has a sub-component **100B** for regulating the data packet flow to and from the shared media network by using a scheduling controller and transmit buffer **100B;** this component is implemented as previously described component **45** in FIG. 10. The sub-component **100B** uses four parameters: (1) the pipe-ID (PID), (2) the time stamp in the data packet header, (3) the common time reference, and (4) the time of arrival (TOA) attached by the SMATM to the incoming data packets from the shared media network and from SVP. Using these parameters sub-component **100B** assigns selected predefined time frames for synchronously transmitting data packets over the synchronous virtual pipe and the shared media network.

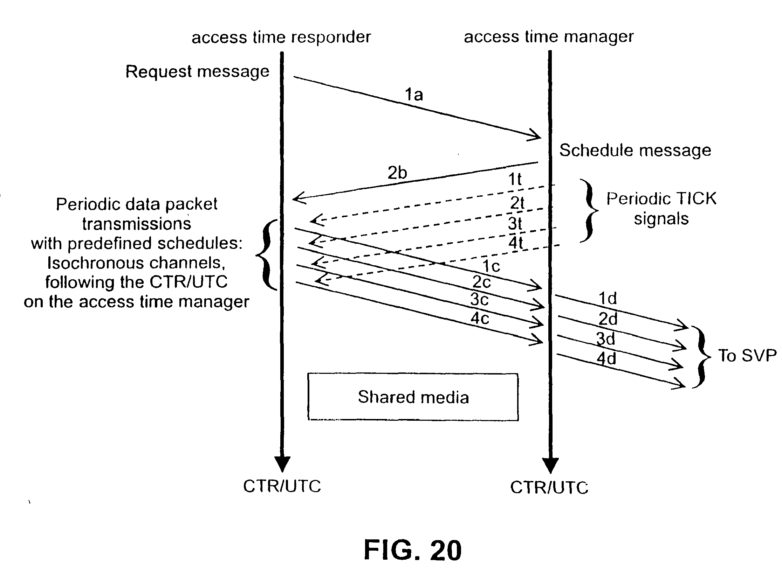

Referring simultaneously to both FIGS. 17 and 20, FIG. 20 shows the protocol used to set up a schedule of periodic transmissions from an end-station **300** to the access time manager **100** for subsequent forwarding a synchronous virtual pipe **41** in the preferred embodiment of the present invention. The end-station **300** that operates as an access time responder issues a request **1a** to the access time manager **100.** The request **1a** describes the nature of the data to be transmitted and the destination, permitting the access time manager **100** to determine what parameters (e.g., periodicity, reserved time frames, etc.) needs to be scheduled to fulfill the request.

Upon determining a schedule suitable to satisfy request **1a,** the access time manager issues a response **2b** to the access time responder which describes to the corresponding end-station the parameters (e.g., periodicity, reserved time frames, etc.) have been reserved for its use. These parameters are issued with respect to a common time reference (CTR) **002** shared by all end-stations **300** and the access time manager **100** via the shared media network **200.**

Note that in one embodiment the request **1a** and the response **2b** may occur during a time interval scheduled by the access time manager specifically for use in negotiating requests. In an alternate embodiment, either or both of request **1a** and response **2b** may occur during other times such as permitted by the existing schedules maintained by the access time manager **100** for shared media network **200.**

Upon receipt of the response **2b,** the end-station access time responder is then permitted to transmit, at the indicated intervals, data packets to be forwarded to a synchronous virtual pipe. In the illustrated example, the access time responder has been scheduled to transmit data packets on the shared media network **200** at times **1c, 2c, 3c,** and **4c.** The access time manager **100** accepts data packets from the shared media network **200,** and then forwards corresponding data packets via the synchronous virtual pipe **41** at times **1d, 2d, 3d,** and **4d,** respectively. The times **1c, 2c, 3c, 4c, 1d, 2d, 3d,** and **4d** are all defined with respect to the common time reference signal. In another embodiment of this invention, the access time manager **100** accepts data packets in multiple parts (e.g., some cable modem protocols) from the shared media network **200,** assembles the multiple parts into data packets, and performs any other processing necessary for the request, and then forwards corresponding data packets via the synchronous virtual pipe **41.**

In another embodiment of this invention, there are two distinct data packet formats: one over SVP (e.g., IP), and the other over the shared media network. The data packet formats over the shared media networks correspond to the specific shared media protocol. In such cases, the access time manager additionally performs the necessary data packet format conversion.

In a preferred embodiment, the access time manager **100** provides a response **2b** that describes an isochronous channel on the shared media network **200.** An isochronous channel is one that provides for periodic reserved transmission of data on a shared media. The isochronous periodicity may be simple or complex. Simple isochronous periodicity provides for consistent, regular transmissions of same-sized groups of data. Complex isochronous periodicity permits irregular but defined transmissions of more than one differently sized groups of data at some regular interval.

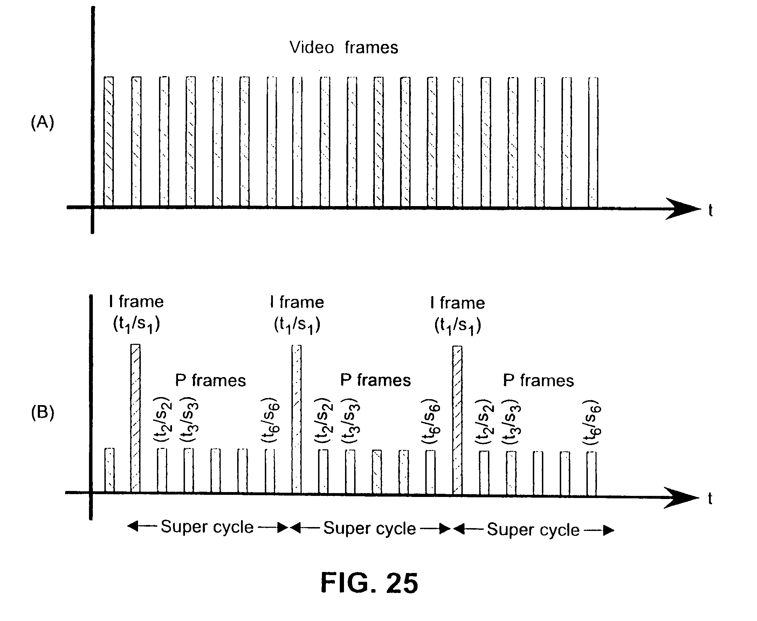

FIG. 25A is an illustration of the data requirements for simple isochronous periodicity. In this illustrated example, data is provided in a single fixed amount at a periodic interval. Referring back to FIG. 20, in the example of FIG. 25A the access time manager **100** would schedule simple isochronous periodic transmissions at times **1c, 2c, 3c,** and **4c** to be of fixed and equal duration, and thus fixed and equal amounts of data for each transmission.

FIG. 25B is an illustration of the data requirements for complex or irregular isochronous periodicity. In this illustrated example, data is provided in two different amounts at a periodic interval, corresponding to a repeating pattern of I-frames and P-frames. The data requirements as shown are very common for compressed video data sources. As shown in this example, the pattern of one I-frame and several P-frames repeats once per super-cycle, although in practice the pattern may repeat at a different interval. The amount of data required for an I-frame is significantly higher than the amount of data required for each of the P-frames. As a result, this data transmission pattern has complex isochronous periodicity, requiring above-average amounts of data at some intervals (i.e., the I-frame in each super-cycle) and average amounts of data at more frequent intervals (i.e., the plurality of P-frames in each super-cycle). Referring back to FIG. 20, in the example of FIG. 25B the access time manager **100** would schedule complex isochronous periodic transmissions such that the transmission time allocated on the shared media network **200** at time **1c** would be greater than the transmission time allocated on the shared media network at times **2c, 3c,** and **4c.**

The following is a simple numerical example for complex periodicity scheduling with compressed video sources, such as MPEG (familiarity with which is assumed below), in the following way:
Let the video-frame rate be 20 video frames per second or every 50 ms
Let Tf be 1 ms
Let k=50 and the time cycle be 50 ms
Let the size of each I video-frame be bounded by 100KBytes and the size of the P video-frames be bounded by 10KBytes.

Assume that an I video-frame is followed by five P video-frames.

Next, create a super-cycle of 6 time cycles, each time cycle has 50 time frames.
The complex periodicity forwarding can be done in the following manner:
Step 1: The video stream is divided into 2Kbytes data packets.
Step 2: The I video-frame is divided into 50 packets which are sent in 50 predefined time frames in time cycle number one.
Step 3: Each of the P video-frames is sent in 5 predefined time frames in each of the following 5 time cycles.
Step 4: GOTO Step 1 and repeat the six time cycles pattern.

In another preferred embodiment, the access time manager **100** provides in addition to the schedule message response **2b** specific TICK signals, **1t, 2t, 3t, 4t,** in FIG. 20, indicating the specific transmission time by the end-station (on access time responder). Consequently, the transmission **1c, 2c, 3c,** and **4d** are in response to TICK signals **1t, 2t, 3t,** and **4t,** respectively, as shown in FIG. 20. In such an embodiment, the isochronous channel across the shared media network **200** is actually created by the access time manager **100.** Again, the isochronous channel is one that provides for periodic reserved transmission of data on a shared media network with either simple or complex periodicity.

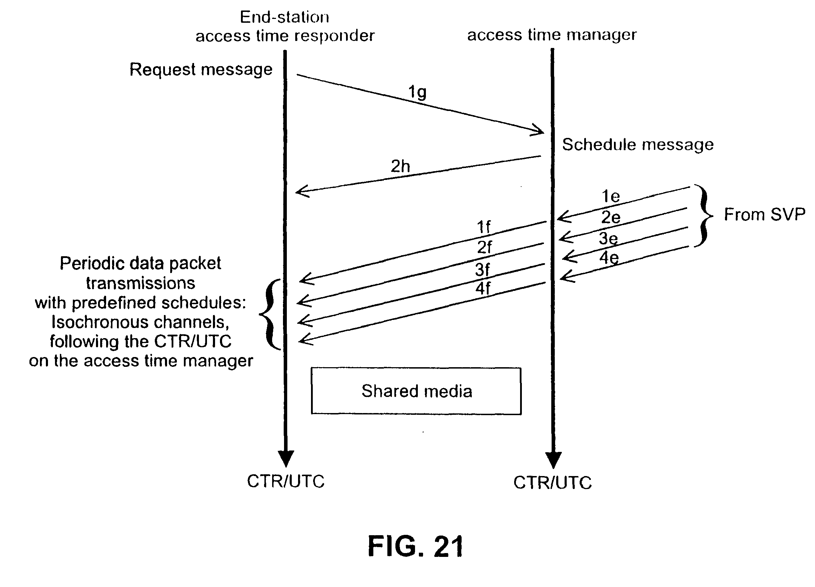

Referring simultaneously to both FIGS. 17 and 21, FIG. 21 shows the protocol used to set up a schedule of periodic transmissions from a synchronous virtual pipe **41** to an end-station **300** via the access time manager **100** in the preferred embodiment of the present invention. The end-station **300** that operates as an access time responder issues a request **1g** to the access time manager **100.** The request **1g** describes the nature of the data to be received and the source, permitting the access time manager **100** to determine what parameters (e.g., periodicity, reserved time frames, etc.) needs to be scheduled to fulfill the request.

Upon determining a schedule suitable to satisfy request **1g**, the access time manager issues a response **2h** to the access time responder which describes to the corresponding end-station the parameters (e.g., periodicity, reserved time frames, etc.) have been reserved for the respective source. These parameters are issued with respect to a common time reference (CTR) **002** shared by all end-stations **300** and the access time manager 100 via the shared media network **200.**

Note that in one embodiment the request **1g** and the response **2h** may occur during a time interval scheduled by the access time manager specifically for use in negotiating requests. In an alternate embodiment, either or both of request **1g** and response **2h** may occur during other times such as permitted by the existing schedules maintained by the access time manager **100** for shared media network **200.**

Upon receipt of the response **2h,** the end-station access time responder is then responsive to receive, at the indicated intervals, data forwarded from the synchronous virtual pipe **41** via the access time manager **100.** In the illustrated example, the access time responder has been scheduled to receive data on the shared media network **200** at times **1f, 2f, 3f,** and **4f.** The access time manager **100** accepts data packets from the synchronous virtual pipe **41** at times **1e, 2e, 3e,** and **4e,** separates the data from those accepted data packets and/or performs any other processing as necessary to support the request, and forwards the corresponding data via the shared media network **200** to the end-station access time responder at times **1f, 2f, 3f,** and **4f,** respectively. The times **1e, 2e, 3e, 4e, 1f, 2f, 3f,** and **4f** are all defined with respect to the common time reference signal.

In a preferred embodiment, the access time manager **100** provides a response **2h** that describes an isochronous channel on the shared media network **200**. An isochronous channel is one that provides for periodic reserved transmission of data on a shared media. The isochronous periodicity may be simple or complex.

Referring again to FIG. 25A with respect to FIG. 20, in the example of FIG. 25A the access time manager **100** would schedule simple isochronous periodic transmissions at times **1f, 2f, 3f,** and **4f** to be of fixed and equal duration, and thus fixed and equal amounts of data for each transmission.

Referring again to FIG. 25B with respect to FIG. 20, in the example of FIG. 25B the access time manager **100** would schedule complex isochronous periodic transmissions such that the transmission time allocated on the shared media network **200** at time **1f** would be greater than the transmission time allocated on the shared media network at times **2f, 3f**, and **4f.**

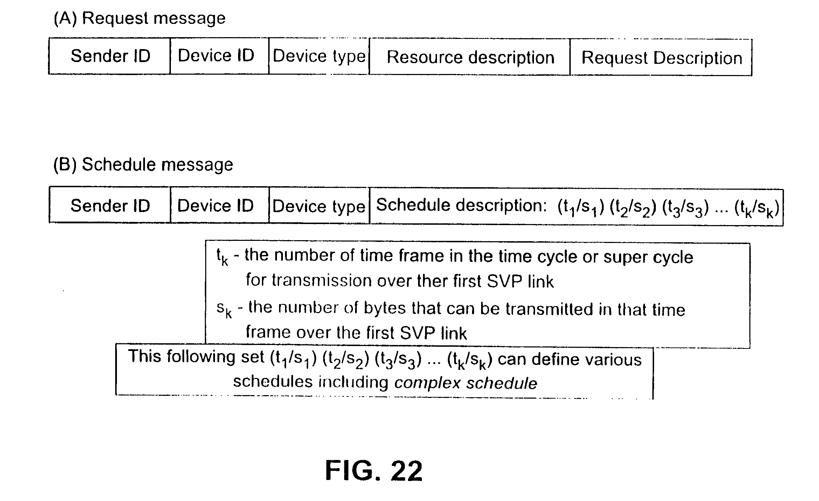

FIG. 22A is an illustration of the types and organization of data contained within the request messages in one embodiment of the present invention. Specifically, it illustrates the format of the requests **1a** of FIG. 20 and **1g** of FIG. 21. The example request as shown contains fields indicating sender identification, device identification, device type, resource description, and request description. The sender identification may be used to identify which of the plurality of end-stations **300** is making the request. The device identification may be used to provide sub-addressing within the access time responder, thus supporting a plurality of co-located devices at the selected end-station. The device type and request description provide further information about the source and/or destination, and the requested schedule of data transfer, including but not limited to the total duration of the transfer, the total size of the transfer, the permitted granularity of the transfer, an indication of whether the data is expected to be bursty in nature, the peak, average, and lowest data rate requirements, the periodicity of the data, and an indication if extended request information is supplied. Extended request information may be used to further detail and describe the requested data transfer beyond the fields indicated in FIG. 22A.

FIG. 22B is an illustration of the types and organization of data contained within the schedule messages in one embodiment of the present invention. Specifically, it illustrates the format of the schedule responses **2b** of FIG. 20 and **2h** of FIG. 21. The example request as shown contains fields indicating sender identification, device identification, device type, and schedule description. The sender identification, device identification, and device type parallel the corresponding entries in the requests **1a** and **1g,** respectively, as described above. The schedule description includes, but is not limited to, detailed information regarding the time frames and transmission durations that have been reserved to support the request made by the access time responder. The transmission durations may be referenced in terms of bytes transferred. Alternatively, the transmission durations may be referenced in terms of time frames, fractions of time frames, absolute time duration, and so forth. In any alternative, the information contained in the schedule message as shown in FIG. 22B provides information to the access time responder as to which time intervals are available in the shared media network **200** for its exclusive use to support the request. In the example shown in FIG. 22B, the schedule response includes a series *l...k* of schedule sets, wherein each schedule set is comprised of an indication of a specific time frame (e.g., t1, t2, t3,... tk) within a cycle or a super-cycle, along with an indication of the number of bytes (e.g., s1, s2, s3, ... sk) that can be transferred within that time frame.

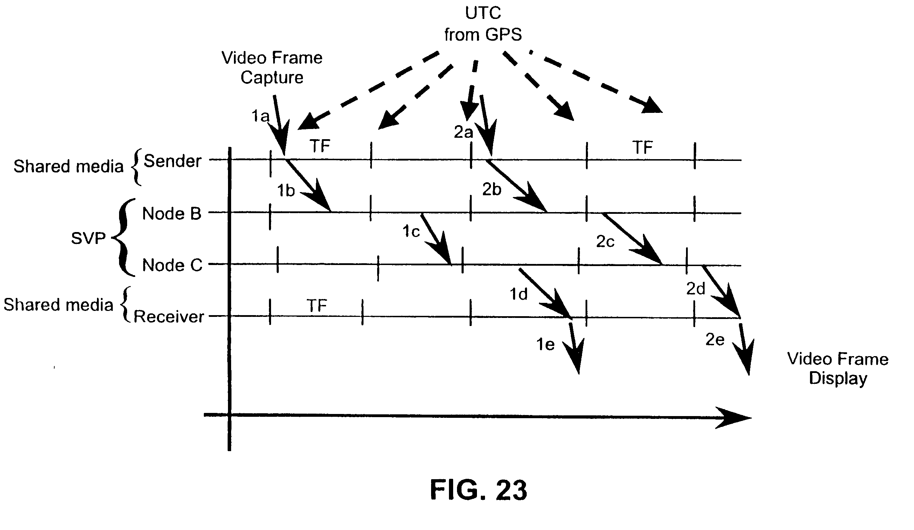

FIG. 23 is a timing diagram illustrating the end-to-end synchronization within synchronous virtual pipe as provided by the present invention. In the specific example as shown in FIG. 23, a video frame is shown to be transferred from end-to-end in synchronization with a common time reference (e.g., UTC from GPS), but it is to be understood that FIG. 23 is only an example and the invention is not limited to the end-to-end synchronized transfer of video frames. As shown in FIG. 23, and end-station **Sender** is located on a first shared media network. The end-station **Sender** captures a video frame at time **1a** and provides any processing required to convert the video frame into a form suitable for direct digital transfer over a synchronous digital network. The details of such processing are well-known in the art and lie outside of the novelty of the present invention and thus will not be detailed herein.

The end-station **Sender** then transmits the data representing the video frame to the shared media network **Node B** at time frame **1b.** The transmission from **Sender** to **Node B** is scheduled apriori by interaction between **Sender** and **Node B** as shown in FIG. 20 and discussed above. The data comprising transmission **1b** is assembled into one or more associated data packets within the shared media network **Node B**.

The shared media network **Node B** forwards the data packet(s) through the synchronous virtual pipe connecting **Node B** to shared media network **Node C** at time frame **1c.** The transmission from **Node B** to **Node C** is scheduled apriori by interaction between **Node B** and **Node C** as part of the operation of setting up a synchronous virtual pipe, which lies outside of the novelty of the present invention and thus will not be detailed herein. Note that as shown in FIG. 3, one synchronous virtual pipe may span a path containing a plurality of interconnected SVP switches **10** (e.g., A, B, C, D).

The shared media network **Node C** then forwards the data contained in the data packet(s) received at time frame **1c** from shared media network **Node C** to end-station **Receiver** at time frame **1d.** The transmission from shared media network **Node C** to end-station **Receiver** is scheduled apriori by interaction between **Node C** and end-station **Receiver** as shown in FIG. 21 and discussed above. The end-station **Receiver** accepts the video frame data at time **1e** and provides any processing required to convert the video frame data into a form suitable for display. The details of such processing are well-known in the art and lie outside of the novelty of the present invention and thus will not be detailed herein.

As shown in FIG. 23, a plurality of individual end-to-end transmissions may be in progress at any given time. In the example illustrated, during the time cycle containing time frame **1d,** the end-station Sender may process a second video frame at time frame **2a**, and thus relay the processed second video frame to the shared media network **Node B** at time frame **2b**. The present invention supports simultaneous pipelined synchronous operation such that for example, time frames **2b** and **1d** may represent the same time frame numbers. It is to be understood that any number of simultaneous end-to-end transfers may be underway at the same time, subject to scheduling constraints due to bandwidth availability, which is clearly known apriori. Further, it is to be understood that because the schedules are established apriori, the indicated pipelined end-to-end operation is free of the problems inherent in the prior art regarding congestion and jitter.

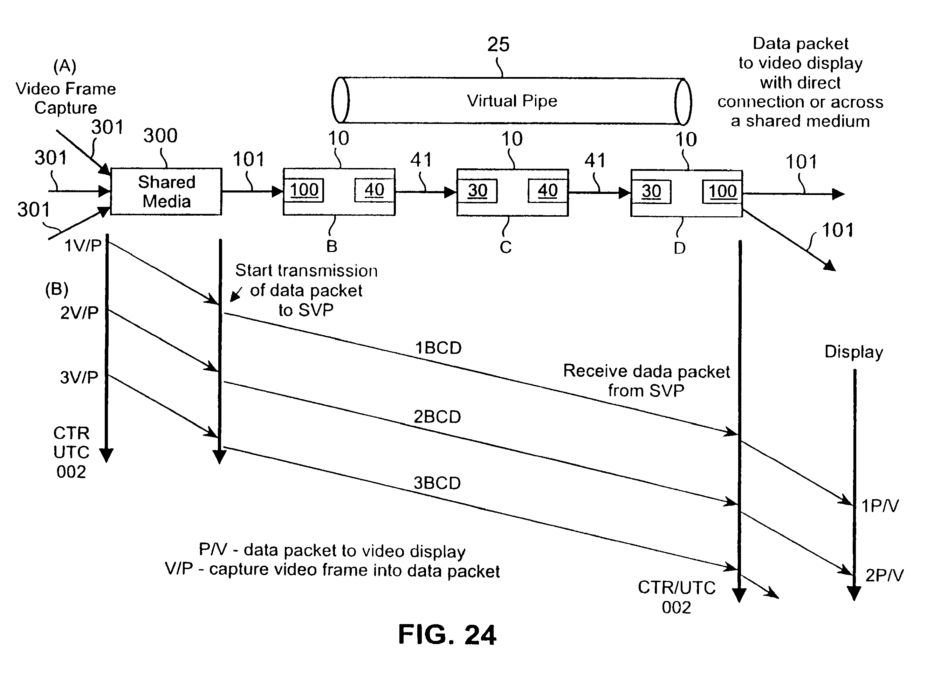

FIG. 24A is a schematic block diagram of an end-to-end communication utilizing the shared media network of the present invention, and thus details another aspect of the end-to-end communication as shown in FIG. 23 and described above. In FIG. 24A, links **301** from a plurality of end-stations **300** (not shown) are coupled to the shared media network **200.** The shared media network **200** is coupled via link **101** to the access time manager **100,** which comprises part of the shared media network B of the present invention. The shared media network **B** additionally comprises an SVP switch **10** which further additionally comprises an output port **40.** The shared media network **B** is linked via a synchronous virtual pipe **25** to an input port **30** of the shared media network D, by way of any number of interstitial SVP switches (e.g., C) and links **41.** Note that as shown in FIG. 3 and previously described, one synchronous virtual pipe **25** may span a path containing a plurality of interconnected SVP switches **10.**

FIG. 24B is a timing diagram illustrating the timely transmission of data in the communication path shown in FIG. **24A,** with the time axis directed downwards as shown. Video frames are captured at times **1V/P, 2V/P,** and **3V/P** and the data representative of the video frames are transported through the shared media network 200 to the shared media network **B** as shown in the figure. Times **1V/P, 2V/P,** and **3V/P** are scheduled in advance using the protocol as shown in FIG. 20 and discussed above. Data packets containing data representative of video frames are then relayed via the synchronous virtual pipe **25** at scheduled times **1BCD, 2BCD,** and **3BCD** (respectively) to shared media network **D**. The data representative of video frames are then relayed during times **1P/V, 2P/V,** and (not shown) **3P/V,** respectively, to an end-station connected to one of the shared media networks available via shared media network D.

### PACKET TELEPHONE SCHEDULING WITH DIFFERENT TIME INTERVALS

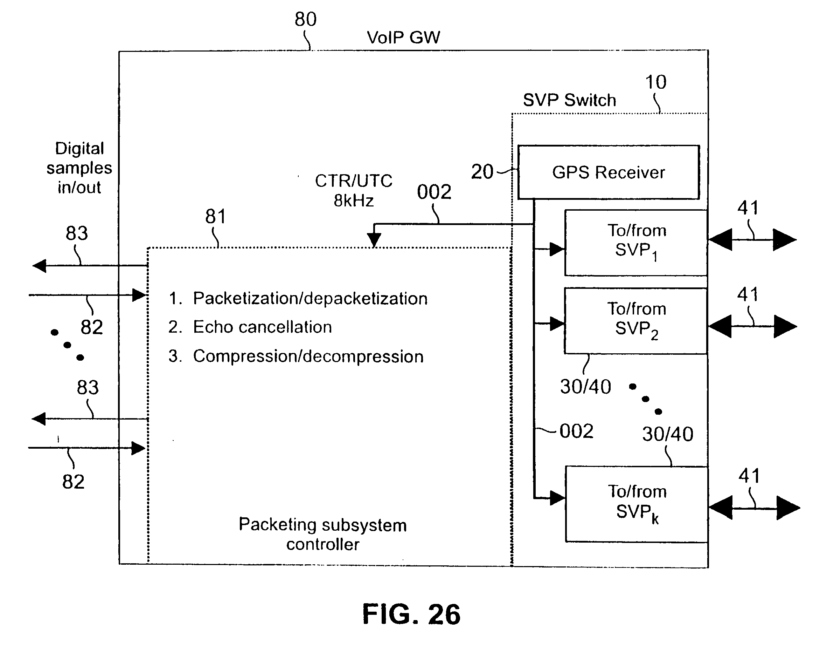

FIG. 26 is a schematic description VoIP gateway (GW) with streaming of digital samples in which the following functions are performed in its packeting subsystem controller **81:** (1) packetization (assembly of digital samples into data packets) and depacketization (separation of digital samples from data packets), (2) echo cancellation, and (3) compression and decompression. The controller **81** is constructed of a central processing unit (CPU), a random access memory (RAM) for storing the data packets and digital samples, a read only memory (ROM) for storing the controller processing program, and a table with forwarding and operation parameters. The packeting subsystem controller 81 is coupled to a synchronous virtual pipe (SVP) switch 10. The controller **81** is also coupled via digital sample input links **82** and digital sample output links 83 to external voice, video, and other devices (not shown).

The SVP switch **10** of FIG. 26 is also coupled to one or more synchronous virtual pipes **41** by way of combination input/output ports **30/40**. The synchronous virtual pipes **41** can be implemented within an IP network.

The SVP switch **10** of FIG. 26 is further comprised of a GPS receiver **20** linked via a common time reference (CTR) signal **002** to each of the input/output ports **30/40**. In this manner, a common time reference is supplied to each of the input ports and each of the output ports within the SVP switch **10**. The CTR signal **002** is also coupled to the controller **81** as shown in the figure.

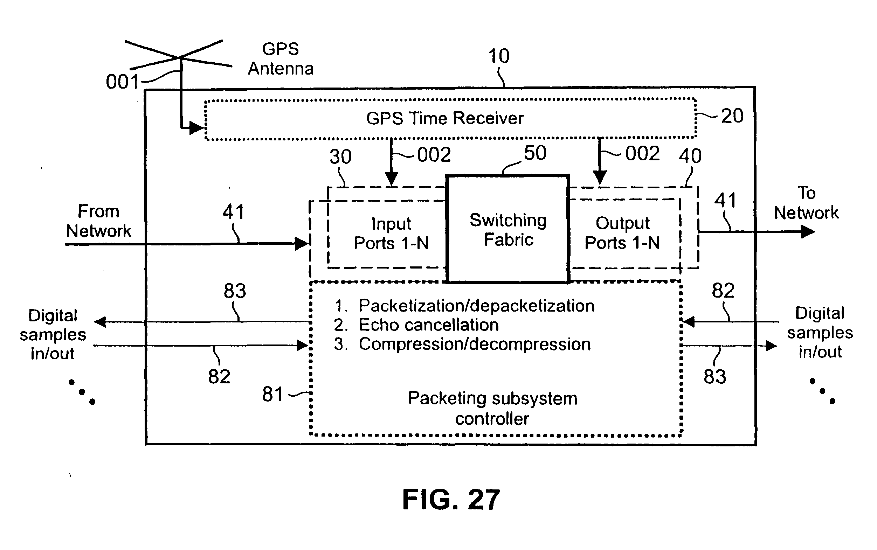

FIG. 27 is a schematic block diagram of a synchronous virtual pipe interface to a VoIP gateway as provided by the present invention, illustrating detail of an alternate embodiment In this embodiment, the SVP switch **10** additionally comprises a switching fabric **50** which is coupled to one or more input ports **30** and one or more output ports **40**. Each of the input ports **30** is coupled to the switch fabric **50** via links **37**, as shown in FIG. 7. Each of the output ports **40** is coupled to the switch fabric **50** via links **51** as shown in FIG. 9. The switch fabric is inherently coupled and integrated (not shown) to the controller **81.** Each pair of respective input port **30** and output port **40** comprise an input/output port **30/40.** As shown in FIG. 27, the common time reference (CTR) signal **002** is coupled to each input port **30,** each output port **40,** and to the controller **81.** The controller **81** is also coupled via digital sample input links 82 and digital sample output links **83** to external voice devices (not shown).

In yet another alternate embodiment, the operation of collection and assembly of data packets may additionally comprise the method of data compression, wherein the digital samples are compressed to further reduce the data packet bandwidth, or to reduce the data packet size required. In some cases the compression operation is performed on a group of block of digital samples with a predefined size or duration. In the case of data originating as visual (e.g. video signals), the compression operation may be performed on a group of block of digital samples within a predefined image region, size, or duration.

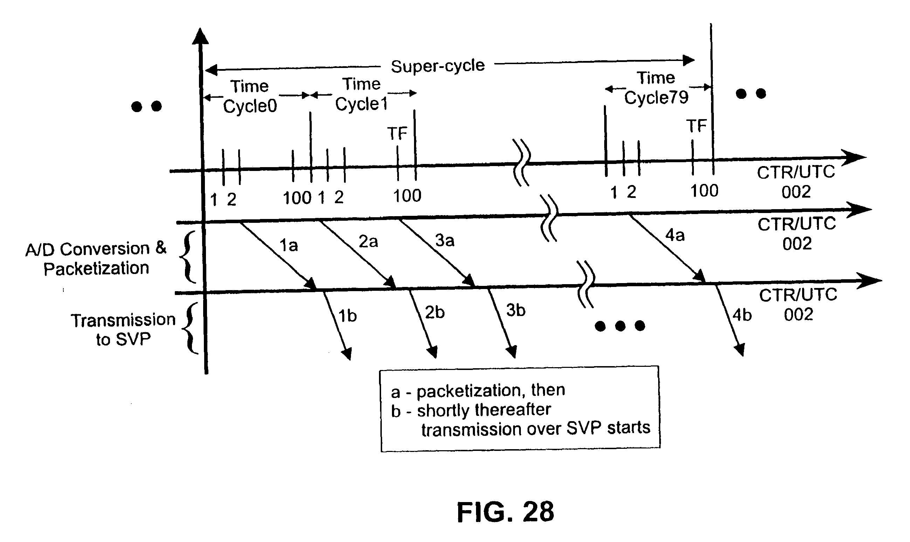

As shown in FIG. 28, the data packet is then transmitted **1b** via the SVP switch **10** to a synchronous virtual pipe during a predefined time frame. In the illustrated example, the set of digital samples assembled into a data packet are transmitted **1b** starting at time frame 1 of time cycle 1. The transmission **1b** occurs simultaneously with the start of the operation of collection and assembly of data packet **2a**, and the process repeats in time for subsequent time cycles.

FIG. 28 shows the timing of the regular collection and assembly of data packets and virtually immediate transmission of the data packet of digital samples of the present invention. Data packets are scheduled for immediate transmission within reserved time framesm thus congestion and routing latency within the initiating VoIP gateway are eliminated in the present invention.

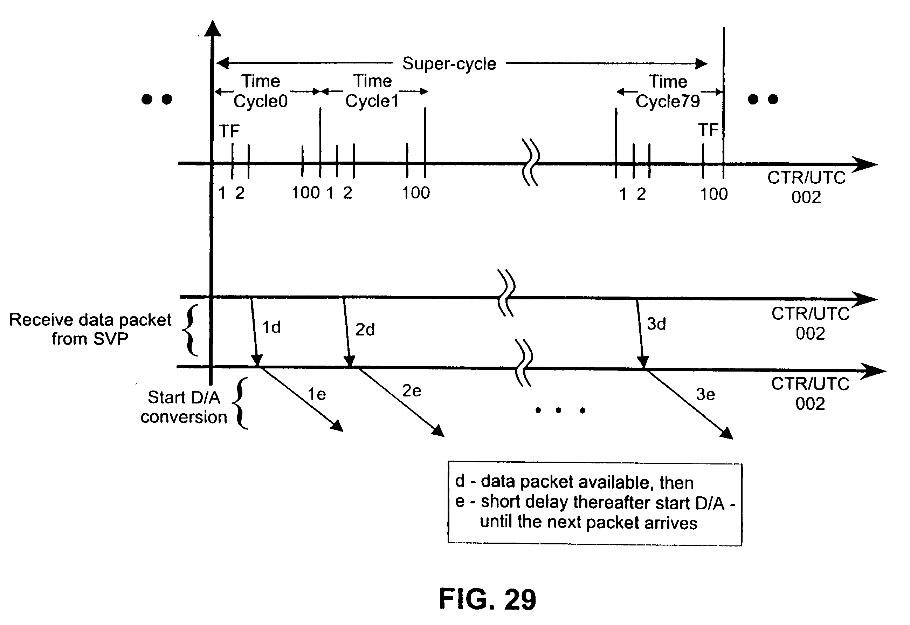

FIG. 29 is a timing diagram illustrating the receipt, separation of digital samples from the data packets, and other processing of data packets of the present invention. The controller **81** is responsive to receipt of data packets comprising digital samples from a synchronous virtual pipe. The data packets arrive regularly **1d** at a predefined time frame in each time cycle, which is time frame 2 in the illustrated example. The separation **1e** of digital samples from the data packets is scheduled within the VoIP gateway of the present invention to immediately separate the digital samples from the data packet thus providing an output of digital samples. The output of digital samples is then relayed to an external device, which in the preferred embodiment for analog telephone is a digital to analog converter.

The regularity of arriving data packets at the same time frame of each time cycle provides for uninterrupted receipt of packets of digital samples, which in turn provides for uninterrupted receipt of digital samples at the digital to analog converter. The jitter present in the received data packet arrival times is controlled by the common time reference to be very small and well-bounded. Because the separation of digital samples from a data packet can be scheduled to occur as soon as the data packet arrives at the VoIP gateway, the effects of latency on the data packets are minimized.

Further supporting telephone communications, the operations of collecting and assembling digital samples into data packets may additionally comprise an echo cancellation operation, in which copies of the digital samples are stored locally in a buffer, and then used in comparison with received digital samples. As a result of the comparison, an echo cancellation signal can be generated to eliminate or reduce the echo caused by the transmitted digital samples being attenuated and returned to the sender by voice equipment at the far end.

The echo cancellation process as described is an improvement over all prior art in that since both ends are based from the common time reference CTR signal 002, and all other transit delays and jitter in the system are known apriori or are well-bounded, it is possible to very precisely align the stored samples with the retrieved samples in time.

It is another object of the present invention to convey multiple telephone communications via scheduled data packets over a synchronous virtual pipe. A preferred embodiment of the present invention schedules the assembly of a plurality of digital sample streams into data packets in coordination with the common time reference so that a data packet is complete and prepared for transmission within a scheduled respective time frame for all associated time cycles.

This scheduling is performed by taking a predefined and known amount of time that the assembly of a data packet will require and subtracting that from the scheduled time frame. If the assembly of digital samples into a data packet starts at the scheduled start time, it will complete just in time for transmission on the scheduled time frame over the synchronous virtual pipe. It is to be appreciated that this.scheduling reduces the latency incurred by each data packet to the minimum possible; and that since data packets are conveyed by a synchronous virtual pipe, the jitter of the arrival times of the data packets at their destination is well-defined and bound to a small value. In fact, the jitter can be reduced to timing error associated with the clock signal from GPS, which can be maintained below one microsecond. Both minimal latency and minimal jitter are requirements for conveying telephone communications and other real-time audio, visual, and audiovisual streams via data packets.

The scheduled assembly takes the digital samples from a plurality of digital sample streams and collects and assembles them into a data packet. The data packet thus can contain a fragment of a plurality of simultaneously occurring telephone communications or other types of real-time streams. The data packet may then be routed via a synchronous virtual pipe to its destination. The method of combining multiple telephone communications together into a data packet provides for reducing the cost of the overhead associated with transmitting each telephone conversation, as the overhead of collection, assembly into data packets, and routing is then shared among all the telephone communications conveyed within the same data packet. This combining is practical for telephone communications primarily because of the low data rate requirements associated with voice telephone communications. In one embodiment, the overhead associated with transmitting a data packet is fixed at 40 bytes. In this embodiment, collecting ten incoming voice streams could be assembled into data packets and routed together, thus reducing the effective overhead for any one stream of digital samples to 4 bytes, or alternatively, reducing the delay associated with collection and assembly of digital samples into data packets.

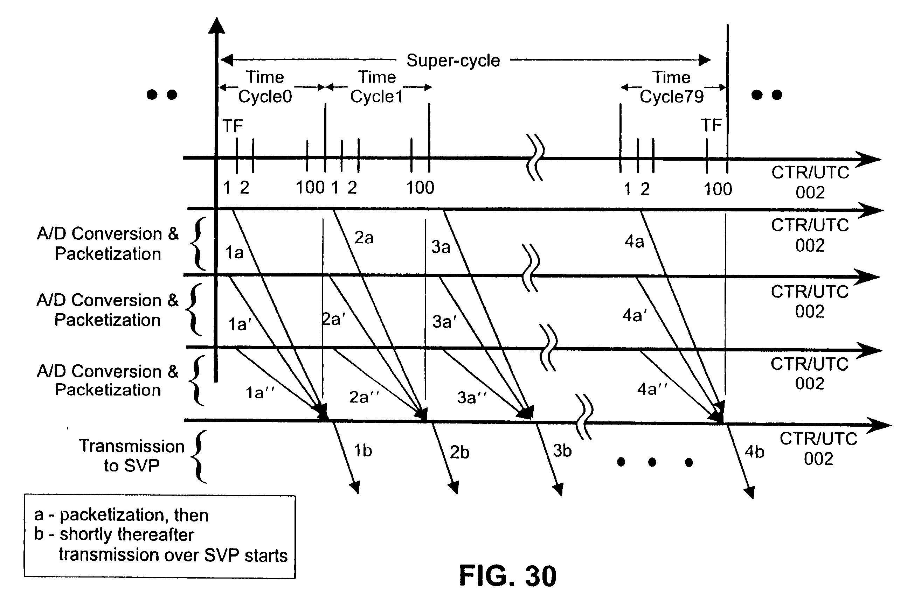

FIG. 30 is a timing diagram illustrating multiplexing of multiple real-time streams (e.g., telephone calls) into one data packet in the present invention. The controller 81 is responsive to receipt of multiple streams of digital samples and collects and assembles the samples over time into a data packet. The collection and assembly of digital samples **1a, 1a', 1a''** into a data packet is shown to start within time frame 1 of time cycle 0 in the example timing of FIG. 30. As shown, the collection and assembly of a data packet can complete within an interval less than or equal to the duration of one time cycle, and therefore repeats the process beginning and ending at the same relative time frames within the associated time cycles for each time cycle. In the illustrated example timing, the collection and assembly of digital samples into a data packet **1a** completes 99 time frames later, in time frame 100 of time cycle 0.

In an alternate embodiment, the operation of collection and assembly of digital samples into a data packet may additionally comprise the method of converting analog voice signals into digital samples for one or more of the streams of digital samples, prior to assembling the digital samples into a data packet. In this alternate embodiment, the scheduling also factors in the additional time required to receive the converted digital samples from the analog to digital converter.

The data packet representing the digital sample inputs **1a, 1a', 1a"** is then transmitted **1b** via the SVP switch **10** to a synchronous virtual pipe during a predefined time frame. In the illustrated example, the data packet of digital samples assembled at **1a** are transmitted **1b** starting at time frame 1 of time cycle 1. The transmission **1b** occurs simultaneously with the start of the operation of collection and assembly of digital samples into a new data packet of new samples **2a, 2a', 2a",** and the process repeats in time for subsequent time cycles.

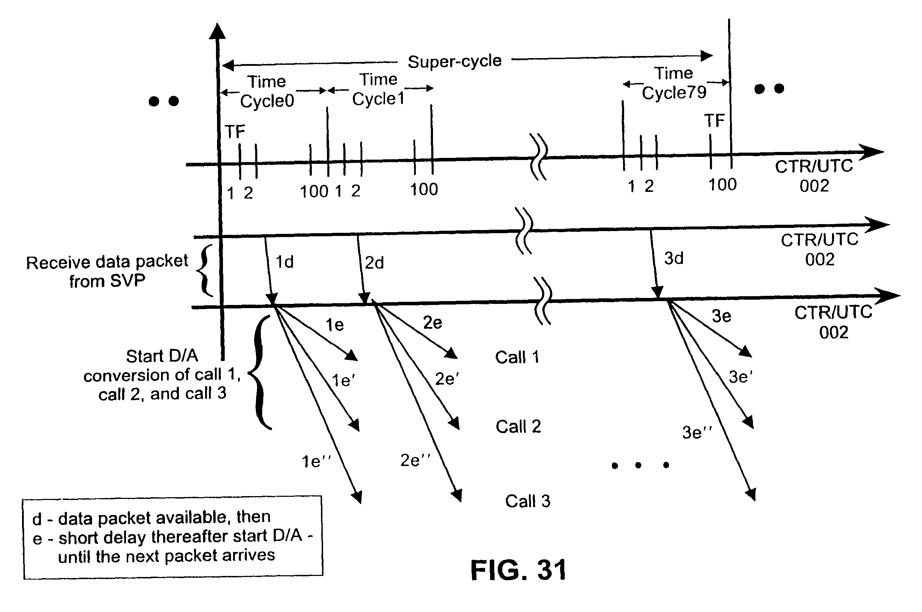

FIG. 31 is a timing diagram illustrating demultiplexing of data packets into multiple streams (e.g., telephone calls) in the present invention. The controller **81** is responsive to receipt of data packets comprising a plurality of streams of digital samples from a synchronous virtual pipe. The data packets arrive regularly **1d** at a predefined time frame in each time cycle, which is time frame 3 in the illustrated example. The separation of digital samples from the data packet of streams of samples **1e, 1e', 1e"** is scheduled, within the VoIP gateway of the present invention, to provide immediate separation of the data packet for each output stream thus providing a plurality of outputs of digital samples. Each output of digital samples is then relayed to an external device, which in the preferred embodiment are digital to analog converters supporting, for example, a conventional analog telephone. In an alternate embodiment, the external device can be a digital phone, a digital video display, or any other form of digital audio, visual, or audiovisual device..

The regularity of arriving data packets at the same time frame of each time cycle provides for uninterrupted receipt of packets of digital samples, which in turn provides for uninterrupted receipt of multiple streams of digital samples at each of the digital to analog converters. The jitter present in the received data packet arrival times is controlled by the common time reference to be very small and well-bounded. Because the separation of digital samples from the data packet can be scheduled to occur as soon as the data packet arrives at the VoIP gateway, the effects of latency on the data packets are minimized.

As shown in FIGS. 30-31, this embodiment of the present invention permits multiple telephone communications to be conveyed via a single synchronous virtual pipe. One or more telephone communications are assembled together into data packets and the respective data packets are forwarded at predefined time frames through a synchronous virtual pipe to a destination, where the digital samples in the data packets are separated and directed to respectively one or more telephone communication destinations. The present invention permits telephone conversations to thus be trunked via synchronous virtual pipes to reduce the overhead associated with assembly of data packets and conveyance of data packets. This reduction in overhead is practical as a result of the relatively low data rate required for voice telephone communications.

It is to be appreciated that multiple telephone communications can be independently converted, collected, and assembled into data packets in accordance with the description above for a single telephone communication, such that each of the multiple telephone communications results in a corresponding respective set of data packets. Each of the data packets is thus independently scheduled and transmitted over the synchronous virtual pipe. The scheduling may transmit multiple data packets within one or more time frame. Assembly of multiple streams of voice data independently into multiple data packets is an optional method of operation when the telephone communications are permitted to travel over the same synchronous virtual pipe to a similar destination.

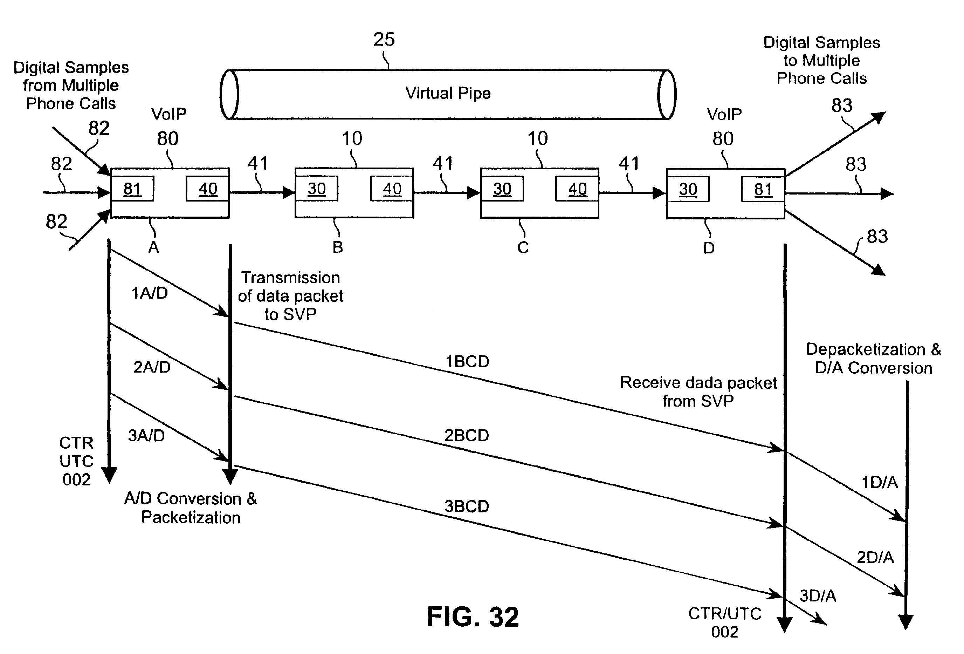

FIG. 32 illustrates both a schematic block diagram of an end-to-end VoIP connection showing one implementation of a trunked phone communication as described above and with respect to FIGS. 30-31, and also shows a composite timing diagram showing end-to-end timing illustrating the timing of the schematic block diagram of an end-to-end VoIP connection. In the illustrated figure, multiple streams of digital samples are conveyed to the controller **81** of VoIP gateway A **80** via digital sample inputs **82.** The VoIP gateway **80** additionally comprises, as described above, an output port **40** coupled via communication link **41** to zero or more SVP switches **10,** e.g. B, C. The zero or more SVP switches **10** comprise a virtual pipe **25,** wherein each of the switches **10** is coupled to the next switch **10** in the virtual pipe **25** by a link **41.**

The virtual pipe begins at VoIP gateway A **80** and ends at VoIP gateway D **80** which as described above incorporates an input port 30 and a controller **81**. The controller **81** couples a plurality of outgoing streams of digital samples via links **83.**

The bottom of FIG. 32 illustrates a timing diagram of the operation of the logical connection as shown in the top of FIG. 32. Time progresses in the downward direction in this timing diagram.

Conversion of analog voice to digital samples and the assembly of same digital samples into data packets occurs at times **1A/D, 2A/D,** and **3A/D** as shown in the figure. These conversion and assembly operations are scheduled to start once per time cycle at a predefined time frame.

The data packets enter the synchronous virtual pipe at the output port **40** of the VoIP gateway A **80** in order and once per time cycle at a predefined time frame. The transmission of data packets via the synchronous virtual pipe is scheduled to occur once each time cycle at a predefined time frame. The actual transit times of data packets via the synchronous virtual pipe are shown as **1BCD, 2BCD,** and **3BCD** in FIG. 32. Due to the nature of the synchronous virtual pipe, the data packets arrive in order and once per time cycle at predefined time frames at the input port **30** of the destination VoIP gateway D **80** as shown in FIG. 32.

The separation of digital samples from the data packets and conversion of digital samples to analog voice occurs during time intervals **1D/A, 2D/A,** and **3D/A** as shown. The separated digital samples are then routed simultaneously to the appropriate digital output links **83**.

FIG. 26 illustrates the structure of a VoIP gateway of the present invention. The VoIP gateway **80** is comprised of a controller **81** coupled to an SVP switch **10.** The controller 81 is also coupled via digital sample input links **82** and digital sample output links **83** to external voice devices (not shown).

FIG. 26 illustrates the structure of a VoIP gateway of the present invention. The VoIP gateway **80** is comprised of a controller **81** coupled to an SVP switch **10.** The controller **81** is also coupled via digital sample input links **82** and digital sample output links **83** to external (e.g., voice) devices (not shown).

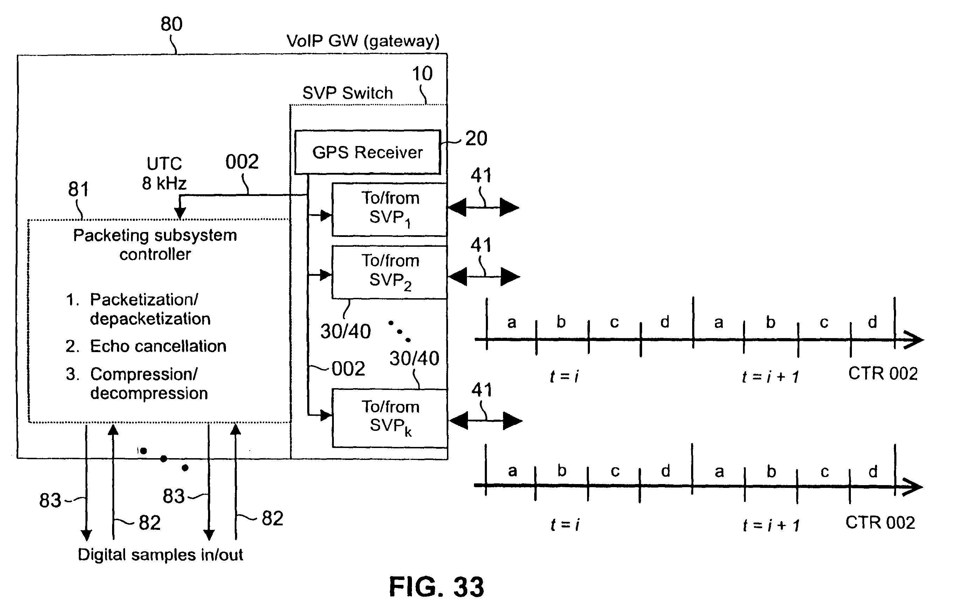

FIG. 33 is a schematic block diagram of time frame call multiplexing using headerless time-based routing of the present invention. The left half of FIG. 33 illustrates the structure of an alternate embodiment of the VoIP gateway. The VoIP gateway **80** is comprised of a controller **81** coupled to an SVP switch 10. The controller **81** is also coupled via digital sample input links **82** and digital sample output links **83** to external voice devices (not shown). The SVP switch 10 of FIG. 33 is also coupled to one or more synchronous virtual pipes **41** by way of combination input/output ports **30/40.**

The SVP switch **10** of FIG. 26 is further comprised of a GPS receiver **20** linked via a common time reference (CTR) signal **002** to each of the input/output ports **30/40.** In this manner, a common time reference is supplied to each of the input ports and each of the output ports within the SVP switch 10. The CTR signal **002** is also coupled to the controller **81** as shown in the figure.

The right half of FIG. 33 illustrates the timing of selected synchronous virtual pipes associated with the links **41.** In the alternate embodiment of FIG. 33, the synchronous virtual pipes relay stripped data packets consisting solely of a payload portion. The header portion typically associated with data packets is not present with a stripped data packet. The links **41,** which may each contain zero or more SVP switches **10** as previously described, convey stripped data packets using a time-based routing method.

FIGS. 33-34 depict a common time reference (CTR) **002** axis that is divided into time cycles. Each time cycle is divided into predefined time frames. Each of the time frame has predefined positions: **a, b, c,** and **d** of either fixed size (in time duration) or variable size (in time duration), consequently, the predefined position can have either fixed size data packets or variable size data packets, respectively. Each time frame can be further divided into time slots. Time frames utilize packet delimiters (PDs) **35C.** The PDs can be one of the control codewords as shown in FIG. 5C. PDs are used to indicate separations; packet delimiters can then be used to distinguish between multiple headerless data packets in the same time frames; and when using PDs in headerless time-based routing, the headerless data packets are permitted to have zero length. Time slots have a predetermined length or lengths and do not use packet delimiters. In an alternate embodiment, time slots may be delimited using a different delimiter than the one used as PDs.

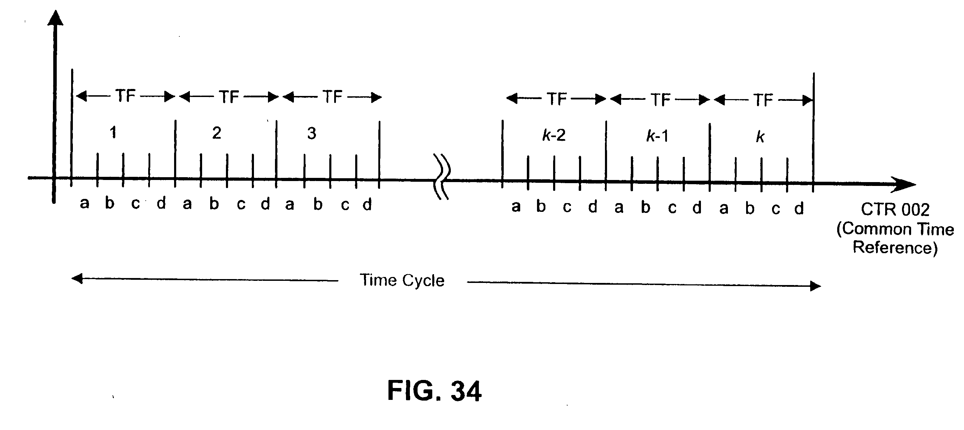

When using the time-based or position-based routing method of the alternate embodiment of the present invention, the position of the stripped data packet within a time cycle determines its destination. As shown symbolically in the right side of FIG. 33 and in FIG. 34, stripped data packets **a, b, c**, and **d** in each time slot are respectively in the four consecutive time slots or positions within each time frame. Each first time slot or position in any time frame contains stripped data packets **a**, each second time slot or position in any time frame contains stripped data packets **b**, and so on as shown in the figure. The operation of the routing controller **35** in the present embodiment is similar to that shown in FIG. 7, except that the values used to index into the lookup table **35D** is a time slot or position counter maintained by the controller **35B** responsive to the packet delimiter signal **35C.** In one variant embodiment, the value of the time slots within a time frame and the time frames within a time cycle may be alternatively defined by an in-band control codeword signal as discussed above.

The present invention permits use as a call center, routing telephone communications from a plurality of origination points to a plurality of destination points and vice versa. This operation may include multi-party conference calls, using the multicasting routing provided by the switches in the synchronous virtual pipe of the present invention. Providing a conference call capability for large numbers of users is made easier by the use of a common time reference signal to coordinate the analog to digital conversion, the multiplexing, the assembly, the switching and routing, the separation, the demultiplexing, and the digital to analog conversion all to the same common timebase.

## Claims

1. A system for scheduling and managing data transfer of data packets, said system comprising:
a plurality of switches (10) with plurality of input ports (30) and output ports (40), each with a unique address for receiving the data packets;
a plurality of at least one virtual pipe (25) each comprising at least two of the switches (10) interconnected via communication links (41) in a path, for transferring the data packets from at least one source to at least one destination; and
a common time reference signal (002) coupled to some of said switches (10);
wherein the common time reference (002) is partitioned into time frames, and wherein the transfer of the data packets is provided during respective ones of a plurality of predefined time frames,
wherein the time frames have at least one predefined duration,
wherein each of the respective data packets is received by a first input port (30) and transmitted by a second output port (40), and wherein the time frame used by the first input port (30) has a first predefined duration and the time frame used by the second output port (40) has a second predefined duration; and the system is further comprising:
a scheduling controller (45) with a plurality of buffers (45C) for mapping from a first predefined time frame with the first predefined duration, within which the respective data packet is transferred into the respective switch, to a second predefined time frame with the second predefined duration, within which the respective data packet is transmitted out of the respective switch, wherein said scheduling controller is responsive to the common time reference signal.

2. The system as in claim 1, wherein the position of said data packet within said second predefined time frame is arbitrary.

3. The system as in claim 1,
wherein a first number of contiguous time frames of the first predefined duration comprise a time cycle of a third predefined duration;
wherein the time cycles of the third predefined duration are contiguous;
wherein a second number of contiguous time frames of the second predefined duration comprise a time cycle of a fourth predefined duration; and
wherein the time cycles of the fourth predefined duration are contiguous.

4. The system as in claim 3, wherein the time cycle of the third predefined duration and the time cycle of the fourth predefined duration have different durations.

5. The system as in claim 3,
wherein a third number of time cycles of the third predefined duration comprise a first super cycle;
wherein the first super cycles are contiguous;
wherein a fourth number of time cycles of the fourth predefined duration comprise a second super cycle; and
wherein the second super cycles are contiguous.

6. The system as in claim 5, wherein the first super cycle and the second super cycle have different durations.

7. The system as in claim 1, wherein the mapping by the scheduling controller (45) provides consistent predefined time interval measured in time frames between input to and output from at least a selected one of the plurality of virtual pipes (25).

8. The system as in claim 1, wherein the transmission over at least a selected one of the plurality of virtual pipes (25) utilizes a plurality of time frame durations.

9. The system as in claim 1,
wherein a predefined number of contiguous time frames of the first predefined duration comprise a time cycle of a fifth predefined duration;
wherein the time cycles of the fifth predefined duration are contiguous;
wherein a predefined number of contiguous time frames of the second predefined duration comprise a time cycle of a sixth predefined duration;
wherein the time cycles of the sixth predefined duration are contiguous;
wherein a predefined number of contiguous time frames of a third predefined duration comprise a time cycle of a seventh predefined duration; and
wherein the time cycles of the seventh predefined duration are contiguous.

10. The system as in claim 9, wherein the transmission over at least a selected one of the plurality of virtual pipes (25) utilizes at least one of: a time cycle of the fifth predefined duration, a time cycle of the sixth predefined duration, and a time cycle of the seventh predefined duration.

11. The systems as in claim 1,
wherein a predefined number of contiguous i1 time frames of duration d1 at a first input port are grouped into a time cycle ic1, wherein i1 is at least 1;
wherein a predefined number of contiguous i2 time frames of duration d2 at a second input port are grouped into a time cycle ic2, wherein i2 is at least 1;
wherein a predefined number of contiguous i3 time frames of duration d3 at a third input port are grouped into a time cycle ic3, wherein i3 is at least 1;
wherein a predefined number of contiguous o1 time frames of duration t1 at a first output port are grouped into a time cycle oc1, wherein o1 is at least 1;
wherein a predefined number of contiguous o2 time frames of duration t2 at a second output port are grouped into a time cycle oc2, wherein o2 is at least 1;
wherein a predefined number of contiguous o3 time frames of duration t3 at a third output port are grouped into a time cycle oc3, wherein o3 is at least 1;
wherein the scheduling of data packets on the input ports (30) and output ports (40) of the switch have plurality of predefined mapping from: i1-in-ic1 and i2-in-ic2 and i3-in-ic3 to o1-in-oc1 and o2-in-oc2 and o3-in-oc3.

12. The system as in claim 11,
wherein the input port (30) attaches a time of arrival (ToA) (35T) to incoming data packets at said input port (30) using the predefined time frame duration and the time cycle associated with the respective input port (30);
wherein the time of arrival (ToA) (35T) relates to the common time reference and is represented as a time frame number within a time cycle; and
wherein the ToA (35T) has a unique representation on each of at least the first input port (30), the second input port (30), and the third input port (30).

13. The system as in claim 12, wherein after the incoming data packet is transferred to one of the output ports (40), the ToA unique representation is utilized to transform to a unique output port representation on each of at least the first output port (40), the second output port (40), and the third output port (40).

14. The system as in claim 13,
wherein the unique output port (40) representation is used by the scheduling controller (45) to select one of the plurality of buffers (45C).

15. The system as in claim 14,
wherein each of the plurality of buffers (45C) is uniquely associated with one of the time frames; and
wherein said one of the time frames is the time the data packet is forwarded from the output port (40).

## Patentansprüche

1. System für die Planung und für das Management der Datenübertragung von Datenpaketen, wobei das genannte System umfasst:
eine Mehrzahl von Vermittlungen (10) mit einer Mehrzahl von Eingangsports (30) und Ausgangsports (40), jeweils mit einer eindeutigen Adresse für den Empfang der Datenpakete;
eine Mehrzahl wenigstens einer virtuellen Pipe (25), die jeweils wenigstens zwei der Vermittlungen (10) umfasst, die über Kommunikationsverbindungen (41) in einem Weg miteinander verbunden sind, um die Datenpakete von wenigstens einer Quelle zu wenigstens einem Ziel zu übertragen; und
ein gemeinsames Zeitreferenzsignal (002), das mit einigen der genannten Vermittlungen (10) gekoppelt ist;
wobei die gemeinsame Zeitreferenz (002) in Zeitrahmen aufgeteilt ist und wobei die Übertragung der Datenpakete während jeweils eines einer Mehrzahl vordefinierter Zeitrahmen geliefert wird,
wobei die Zeitrahmen wenigstens eine vordefinierte Dauer haben,
wobei jedes der jeweiligen Datenpakete von einem ersten Eingangsport (30) empfangen und von einem zweiten Ausgangsport (40) gesendet wird und wobei der von dem ersten Eingangsport (30) verwendete Zeitrahmen eine erste vordefinierte Dauer hat und wobei der von dem zweiten Ausgangsport (40) verwendete Zeitrahmen eine zweite vordefinierte Dauer hat; und wobei das System ferner umfasst:
eine Planungssteuereinheit (45) mit einer Mehrzahl von Puffern (45C) zum Abbilden von einem ersten vordefinierten Zeitrahmen mit der ersten vordefinierten Dauer, innerhalb deren das jeweilige Datenpaket zu der jeweiligen Vermittlung übertragen wird, auf einen zweiten vordefinierten Zeitrahmen mit der zweiten vordefinierten Dauer, innerhalb deren das jeweilige Datenpaket aus der jeweiligen Vermittlung gesendet wird, wobei die genannte Planungssteuereinheit auf das gemeinsame Zeitreferenzsignal reagiert.

2. System gemäß Anspruch 1, bei dem die Position des genannten Datenpakets innerhalb des genannten zweiten vordefinierten Zeitrahmens beliebig ist.

3. System gemäß Anspruch 1,
bei dem eine erste Anzahl aneinandergrenzender Zeitrahmen mit der ersten vordefinierten Dauer einen Zeitzyklus mit einer dritten vordefinierten Dauer umfassen;
wobei die Zeitzyklen mit der dritten vordefinierten Dauer aneinandergrenzend sind;
wobei eine zweite Anzahl aneinandergrenzender Zeitrahmen mit der zweiten vordefinierten Dauer einen Zeitzyklus mit einer vierten vordefinierten Dauer umfassen; und
wobei die Zeitzyklen mit der vierten vordefinierten Dauer aneinandergrenzend sind.

4. System gemäß Anspruch 3, bei dem der Zeitzyklus mit der dritten vordefinierten Dauer und der Zeitzyklus mit der vierten vordefinierten Dauer verschiedene Dauern haben.

5. System gemäß Anspruch 3,
bei dem eine dritte Anzahl von Zeitzyklen mit der dritten vordefinierten Dauer einen ersten Superzyklus umfassen;
wobei die ersten Superzyklen aneinandergrenzend sind;
wobei eine vierte Anzahl von Zeitzyklen mit der vierten vordefinierten Dauer einen zweiten Superzyklus umfassen; und
wobei die zweiten Superzyklen aneinandergrenzend sind.

6. System gemäß Anspruch 5, bei dem der erste Superzyklus und der zweite Superzyklus verschiedene Dauern haben.

7. System gemäß Anspruch 1, bei dem die Abbildung durch die Planungssteuereinheit (45) ein gleichbleibendes vordefiniertes Zeitintervall liefert, das in Zeitrahmen zwischen der Eingabe in und der Ausgabe von wenigstens einer ausgewählten der Mehrzahl virtueller Pipes (25) gemessen wird.

8. System gemäß Anspruch 1, bei dem die Übertragung über wenigstens eine ausgewählte der Mehrzahl virtueller Pipes (25) eine Mehrzahl von Zeitrahmendauern nutzt.

9. System gemäß Anspruch 1,
bei der eine vordefinierte Anzahl aneinandergrenzender Zeitrahmen mit der ersten vordefinierten Dauer einen Zeitzyklus mit einer fünften vordefinierten Dauer umfassen;
wobei die Zeitzyklen mit der fünften vordefinierten Dauer aneinandergrenzend sind;
wobei eine vordefinierte Anzahl aneinandergrenzender Zeitrahmen mit der zweiten vordefinierten Dauer einen Zeitzyklus mit einer sechsten vordefinierten Dauer umfassen;
wobei die Zeitzyklen mit der sechsten vordefinierten Dauer aneinandergrenzend sind;
wobei eine vordefinierte Anzahl aneinandergrenzender Zeitrahmen mit einer dritten vordefinierten Dauer einen Zeitzyklus mit einer siebenten vordefinierten Dauer umfassen; und
wobei die Zeitzyklen mit der siebenten vordefinierten Dauer aneinandergrenzend sind.

10. System gemäß Anspruch 9, bei dem die Übertragung über wenigstens eine ausgewählte der Mehrzahl virtueller Pipes (25) wenigstens einen der Folgenden nutzt: einen Zeitzyklus mit der fünften vordefinierten Dauer, einen Zeitzyklus mit der sechsten vordefinierten Dauer und einen Zeitzyklus mit der siebenten vordefinierten Dauer.

11. Systeme gemäß Anspruch 1,
bei denen eine vordefinierte Anzahl aneinandergrenzender i1 Zeitrahmen mit der Dauer d1 bei einem ersten Eingangsport zu einem Zeitzyklus ic1 gruppiert sind, wobei i1 wenigstens 1 ist;
bei denen eine vordefinierte Anzahl aneinandergrenzender i2 Zeitrahmen mit der Dauer d2 bei einem zweiten Eingangsport zu einem Zeitzyklus ic2 gruppiert sind, wobei i2 wenigstens 1 ist;
bei denen eine vordefinierte Anzahl aneinandergrenzender i3 Zeitrahmen mit der Dauer d3 bei einem dritten Eingangsport zu einem Zeitzyklus ic3 gruppiert sind, wobei i3 wenigstens 1 ist;
bei denen eine vordefinierte Anzahl aneinandergrenzender o1 Zeitrahmen mit der Dauer t1 bei einem ersten Ausgangsport zu einem Zeitzyklus oc1 gruppiert sind, wobei o1 wenigstens 1 ist;
bei denen eine vordefinierte Anzahl aneinandergrenzender o2 Zeitrahmen mit der Dauer t2 bei einem zweiten Ausgangsport zu einem Zeitzyklus oc2 gruppiert sind, wobei o2 wenigstens 1 ist;
bei denen eine vordefinierte Anzahl aneinandergrenzender o3 Zeitrahmen mit der Dauer t3 bei einem dritten Ausgangsport zu einem Zeitzyklus oc3 gruppiert sind, wobei o3 wenigstens 1 ist;
bei denen die Planung von Datenpaketen an den Eingangsports (30) und an den Ausgangsports (40) der Vermittlung eine Mehrzahl vordefinierter Abbildungen von: i1-in-ic1 und i2-in-ic2 und i3-in-ic3 auf o1-in-oc1 und o2-in-oc2 und o3-in-oc3 besitzt.

12. System gemäß Anspruch 11,
bei dem der Eingangsport (30) an bei dem genannten Eingangsport (30) ankommenden Datenpaketen unter Verwendung der vordefinierten Zeitrahmendauer und des dem jeweiligen Eingangsport (30) zugeordneten Zeitzyklus eine Ankunftszeit (ToA) (35T) anbringt;
bei dem sich die Ankunftszeit (ToA) (35T) auf die gemeinsame Zeitreferenz bezieht und als eine Zeitrahmennummer innerhalb eines Zeitzyklus dargestellt ist; und
wobei die ToA (35T) an jedem wenigstens des ersten Eingangsports (30), des zweiten Eingangsports (30) und des dritten Eingangsports (30) eine eindeutige Darstellung besitzt.

13. System gemäß Anspruch 12, bei dem, nachdem das ankommende Datenpaket zu einem der Ausgangsports (40) übertragen worden ist, die eindeutige ToA-Darstellung genutzt wird, um an jedem wenigstens des ersten Ausgangsports (40), des zweiten Ausgangsports (40) und des dritten Ausgangsports (40) in eine eindeutige Ausgangsportdarstellung zu transformieren.

14. System gemäß Anspruch 13,
bei dem die eindeutige Ausgangsport-(40)-Darstellung von der Planungssteuereinheit (45) verwendet wird, um einen der Mehrzahl von Puffern (45C) auszuwählen.

15. System gemäß Anspruch 14,
bei dem jeder der Mehrzahl von Puffern (45C) eindeutig mit einem der Zeitrahmen in Verbindung gebracht wird; und
wobei der genannte eine der Zeitrahmen die Zeit ist, zu der das Datenpaket von dem Ausgangsport (40) weitergeleitet wird.

## Revendications

1. Système de planification et de gestion de transfert de données de paquets de données, ledit système comprenant :
une pluralité de commutateurs (10) avec une pluralité de ports d'entrée (30) et de ports de sortie (40), chacun avec une adresse unique pour recevoir les paquets de données ;
une pluralité d'au moins un câble virtuel (25), chacun comprenant au moins deux commutateurs (10) interconnectés via des liens de communication (41) dans un chemin, pour transférer les paquets de données d'au moins une source vers au moins une destination ; et
un signal de référence temporel commun (002) couplé à certains desdits commutateurs (10) ;
dans lequel la référence temporelle commune (002) est divisée en périodes de temps et dans lequel le transfert des paquets de données est fourni pendant certaines périodes respectives d'une pluralité de périodes de temps prédéfinies,
dans lequel les périodes de temps ont au moins une durée prédéfinie,
dans lequel chacun des paquets de données respectifs est reçu par un premier port d'entrée (30) et transmis par un deuxième port de sortie (40), et dans lequel la période utilisée par le premier port d'entrée (30) a une première durée prédéfinie et la période utilisée par le deuxième port de sortie (40) a une deuxième durée prédéfinie ; et le système comprend en outre :
un contrôleur de planification (45) avec une pluralité de mémoires tampon (45C) pour effectuer un mappage à partir d'une première période de temps prédéfinie avec la première durée prédéfinie, dans laquelle le paquet de données respectif est transféré dans le commutateur respectif vers une deuxième période de temps prédéfinie avec la deuxième durée prédéfinie,
dans laquelle le paquet de données respectif est transmis hors du commutateur respectif, dans lequel ledit contrôleur de planification est réceptif par rapport au signal de référence temporel commun.

2. Système selon la revendication 1, dans lequel la position dudit paquet de données dans ladite deuxième période de temps prédéfinie est arbitraire.

3. Système selon la revendication 1,
dans lequel un premier nombre de périodes de temps contiguës de la première durée prédéfinie comprend un cycle temporel d'une troisième durée prédéfinie ;
dans lequel les cycles temporels de la troisième durée prédéfinie sont contigus ;
dans lequel un deuxième nombre de périodes de temps contiguës de la deuxième durée prédéfinie comprend un cycle temporel d'une quatrième durée prédéfinie ; et
dans lequel les cycles temporels de la quatrième durée prédéfinie sont contigus.

4. Système selon la revendication 3, dans lequel le cycle temporel de la troisième durée prédéfinie et le cycle temporel de la quatrième durée prédéfinie ont des durées différentes.

5. Système selon la revendication 3,
dans lequel un troisième nombre de cycles temporels de la troisième durée prédéfinie comprend un premier super cycle ;
dans lequel les premiers super cycles sont contigus ;
dans lequel un quatrième nombre de cycles temporels de la quatrième durée prédéfinie comprend un second super cycle ; et
dans lequel les seconds super cycles sont contigus.

6. Système selon la revendication 5, dans lequel le premier super cycle et le second super cycle ont des durées différentes.

7. Système selon la revendication 1, dans lequel le mappage effectué par le contrôleur de planification (45) fournit un intervalle de temps prédéfini cohérent mesuré en périodes de temps entre l'entrée et la sortie d'au moins un câble sélectionné d'une pluralité de câbles virtuels (25).

8. Système selon la revendication 1, dans lequel la transmission sur au moins un câble sélectionné d'une pluralité de câbles virtuels (25) utilise une pluralité de durées de périodes de temps.

9. Système selon la revendication 1,
dans lequel un nombre prédéfini de périodes de temps contiguës de la première durée prédéfinie comprend un cycle temporel d'une cinquième durée prédéfinie ;
dans lequel les cycles temporels de la cinquième durée prédéfinie sont contigus ;
dans lequel un nombre prédéfini de périodes de temps contiguës de la deuxième durée prédéfinie comprend un cycle temporel d'une sixième durée prédéfinie ;
dans lequel les cycles temporels de la sixième durée prédéfinie sont contigus ;
dans lequel un nombre prédéfini de périodes de temps contiguës d'une troisième durée prédéfinie comprend un cycle temporel d'une septième durée prédéfinie ; et
dans lequel les cycles temporels de la septième durée prédéfinie sont contigus.

10. Système selon la revendication 9, dans lequel la transmission sur au moins un câble sélectionné d'une pluralité de câbles virtuels (25) utilise au moins un des cycles temporels suivants : un cycle temporel de la cinquième durée prédéfinie, un cycle temporel de la sixième durée prédéfinie et un cycle temporel de la septième durée prédéfinie.

11. Systèmes selon la revendication 1,
dans lequel un nombre prédéfini de périodes de temps contiguës i1 d'une durée d1 au premier port d'entrée sont regroupées dans un cycle temporel ic1, dans lequel il est au moins 1 ;
dans lequel un nombre prédéfini de périodes de temps contiguës i2 d'une durée d2 au deuxième port d'entrée sont regroupées dans un cycle temporel ic2, dans lequel i2 est au moins 1 ;
dans lequel un nombre prédéfini de périodes de temps contiguës i3 d'une durée d3 au troisième port d'entrée sont regroupées dans un cycle temporel ic3, dans lequel i3 est au moins 1 ;
dans lequel un nombre prédéfini de périodes de temps contiguës o1 d'une durée t1 au premier port de sortie sont regroupées dans un cycle temporel oc1, dans lequel o1 est au moins 1 ;
dans lequel un nombre prédéfini de périodes de temps contiguës o2 d'une durée t2 au deuxième port de sortie sont regroupées dans un cycle temporel oc2, dans lequel o2 est au moins 1 ;
dans lequel un nombre prédéfini de périodes de temps contiguës o3 d'une durée t3 au troisième port de sortie sont regroupées dans un cycle temporel oc3, dans lequel o3 est au moins 1 ;
dans lequel la planification des paquets de données sur les ports d'entrée (30) et les ports de sortie (40) du commutateur ont une pluralité de mappages prédéfinis de : i1-in-ic1 et i2-in-ic2 et i3-in-ic3 à o1-in-oc1 et o2-in-oc2 et o3-in-oc3.

12. Système selon la revendication 11,
dans lequel le port d'entrée (30) attache une heure d'arrivée (ToA) (35T) aux paquets de données entrants au niveau dudit port d'entrée (30) à l'aide de la durée de la période de temps prédéfinie et le cycle temporel associé au port d'entrée respectif (30) ;
dans lequel l'heure d'arrivée (ToA) (35T) se réfère à la référence temporelle commune et est représentée sous forme de numéro de période de temps dans un cycle temporel ; et
dans lequel la ToA (35T) possède une représentation unique sur au moins chaque premier port d'entrée (30), deuxième port d'entrée (30) et troisième port d'entrée (30).

13. Système selon la revendication 12, dans lequel une fois que le paquet de données entrant est transféré à un des ports de sortie (40), la représentation unique ToA est utilisée pour transformation en une représentation unique du port de sortie sur chacun au moins du premier port de sortie (40), du deuxième port de sortie (40) et du troisième port de sortie (40).

14. Système selon la revendication 13,
dans lequel la représentation du port de sortie unique (40) est utilisée par le contrôleur de planification (45) pour sélectionner une des mémoires tampon de la pluralité de mémoires tampon (45C).

15. Système selon la revendication 14,
dans lequel chaque mémoire tampon de la pluralité de mémoires tampon (45C) est associée de façon individuelle à une des périodes de temps ; et
dans lequel une desdites périodes de temps est l'heure à laquelle le paquet de données est transféré à partir du port de sortie (40).
